(19)

**Europäisches Patentamt**
**European Patent Office**
**Office européen des brevets**

(11) **EP 4 645 523 A1**

(12) **EUROPEAN PATENT APPLICATION**
published in accordance with Art. 153(4) EPC

(43) Date of publication:
05.11.2025 Bulletin 2025/45

(21) Application number: 24880088.0

(22) Date of filing: 15.10.2024

(51) International Patent Classification (IPC):
$H01M\ 10/54^{(2006.01)}$  $H01M\ 4/525^{(2010.01)}$
$H01M\ 4/505^{(2010.01)}$  $H01M\ 4/36^{(2006.01)}$
$C22B\ 1/02^{(2006.01)}$  $C22B\ 7/00^{(2006.01)}$
$H01M\ 4/02^{(2006.01)}$

(52) Cooperative Patent Classification (CPC):
C22B 1/02; C22B 7/00; H01M 4/02; H01M 4/36;
H01M 4/505; H01M 4/525; H01M 10/54;
Y02W 30/84

(86) International application number:
PCT/KR2024/015615

(87) International publication number:
WO 2025/084751 (24.04.2025 Gazette 2025/17)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.10.2023  KR 20230137423
16.10.2023  KR 20230137425
11.10.2024  KR 20240138681

(71) Applicant: **LG Energy Solution, Ltd.**
**Seoul 07335 (KR)**

(72) Inventors:
• **PARK, Gwangseon**
**Daejeon 34122 (KR)**

• **SEO, Yongsik**
**Daejeon 34122 (KR)**
• **LEE, Jeongbae**
**Daejeon 34122 (KR)**
• **CHOI, Jeong Mi**
**Daejeon 34122 (KR)**
• **PARK, Se Ho**
**Daejeon 34122 (KR)**
• **NOH, Taechong**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR RECYCLING POSITIVE ELECTRODE ACTIVE MATERIAL AND RECYCLED POSITIVE ELECTRODE ACTIVE MATERIAL PRODUCED THEREFROM**

(57) The present invention relates to a method of recycling a cathode active material and a recycled cathode active material prepared using the same. The method according to the present invention includes step (i) of heat-treating a waste cathode in which a cathode active material layer is formed on a current collector to thermally decompose a binder and conductive material in the cathode active material layer, separate the current collector from the cathode active material layer, and recover a cathode active material in the cathode active material layer; and step (ii) including step (ii-1) of adding calcium or a calcium compound to the recovered cathode active material and performing reheating treatment at 600 to 750 °C; or step (ii-2) of pre-washing the recovered cathode active material with a washing solution, adding a lithium precursor and calcium or a calcium compound thereto, and performing annealing.

According to the present invention, by adding calcium or a calcium compound to the cathode active material recovered after heat treatment, and performing reheating treatment, the present invention has an effect of providing a method of recycling a cathode active material and a recycled cathode active material having excellent efficiency lifespan characteristics, and resistance characteristics prepared the same.

**(Cont. next page)**

EP 4 645 523 A1

[FIG. 2]

```
S10 ── WASTE CATHODES
              │
              ▼
S20 ── CRUSHING
              │
              ▼
S30 ── HEAT TREATING
              │
              ▼
S40 ── REHEAT TREATING
              │
              ▼
S50 ── PRE-WASHING
              │
              ▼
S60 ── ANNEALING
              │
              ▼
S70 ── POST-WASHING
              │
              ▼
S80 ── SURFACE COATING
              │
              ▼
    RECYCLED CATHODE ACTIVE MATERIAL
```

**Description**

[Technical Field]

[Cross-Reference to Related Applications]

This application claims priority to Korean Patent Application No. 10-2023-0137425, filed on October 16, 2023, Korean Patent Application No. 10-2023-0137423, filed on October 16, 2023, and Korean Patent Application No. 10-2024-0138681, re-filed on October 11, 2024, based on the priority of the above patents, in the Korean Intellectual Property Office, the disclosures of each of which are incorporated herein by reference.

The present invention relates to a method of recycling a cathode active material and recycled cathode active material prepared using the same. More specifically, according to the method of the present invention, by heat-treating a waste cathode including a current collector and a cathode active material layer coated on the current collector to recover a cathode active material and adding calcium or a calcium compound to the recovered cathode active material and performing reheating treatment, or pre-washing the recovered cathode active material, adding a lithium precursor and calcium or a calcium compound thereto, and performing annealing, the efficiency, lifespan characteristics, and resistance characteristics of secondary batteries may be excellent. In addition, environmental friendliness may be achieved by not using acids in recovery and recycling processes, and process costs may be reduced as neutralization and wastewater treatment are not required. In addition, the cathode active material is recycled without decomposition, so there are no discarded metal elements. In addition, since no organic solvents are used, the generation of toxic gases or explosions may be prevented, and economic efficiency and productivity may be greatly improved.

[Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

Therefore, there is an urgent need to develop a method of safely recycling a cathode active material having improved rate performance in an environmentally friendly manner at a low cost through a simple process without loss of metal elements from a waste cathode.

[Disclosure]

[Technical Problem]

Therefore, the present invention has been made in view of the above problems, and it is one object of the present invention to provide a method of recycling a cathode active material. According to the method of the present invention, by heat-treating a waste cathode including a current collector and a cathode active material layer coated on the current collector to recover a cathode active material and adding calcium or a calcium compound to the recovered cathode active material and performing reheating treatment, or pre-washing the recovered cathode active material, adding a lithium precursor and calcium or a calcium compound thereto, and performing annealing, a cathode active material having excellent efficiency, lifespan characteristics, and resistance characteristics may be provided. In addition, environmental friendliness may be achieved by not using acids in recovery and recycling processes, and process costs may be reduced as neutralization and wastewater treatment are not required. In addition, the cathode active material is recycled without decomposition, so there are no discarded metal elements. In addition, since no organic solvents are used, the generation of toxic gases or explosions may be prevented, and economic efficiency and productivity may be greatly improved.

It is another object of the present invention to provide a secondary battery having excellent efficiency, lifespan characteristics, and resistance characteristics.

The above and other objects can be accomplished by the present invention described below.

[Technical Solution]

I) In accordance with one aspect of the present invention, provided is a method of recycling a cathode active material, the method including (i) heat-treating a waste cathode in which a cathode active material layer is formed on a current collector to thermally decompose a binder and conductive material in the cathode active material layer, separate the current collector from the cathode active material layer, and recover a cathode active material in the cathode active material layer; and (ii) (ii-1) adding calcium or a calcium compound to the recovered cathode active material and performing reheating treatment at 600 to 750 °C; or (ii-2) pre-washing the recovered cathode active material with a washing solution, adding a lithium precursor and calcium or a calcium compound thereto, and performing annealing.

II) According to I), the calcium compound may preferably include one or more of $Ca(OH)_2$, CaO, and $Ca(NO_3)_2$, more preferably one or more of $Ca(OH)_2$ and $Ca(NO_3)_2$, still more preferably $Ca(OH)_2$.

III) According to I) or II), in step (ii-1), based on 1 mol of an F component present in the cathode active material recovered after heat treatment of step (i), the calcium or calcium compound may be preferably added in an amount corresponding to 0.03 to 0.4 mol (based on calcium metal).

IV) According to I) to III), in step (i), the heat treatment may be preferably performed at 300 to 650 °C for 10 minutes to 10 hours.

V) According to I) to IV), in step (ii), the reheating treatment may be preferably performed for 5 to 15 hours.

VI) According to I) to V), in step (ii-2), based on a weight of the recovered cathode active material, the calcium or calcium compound may be preferably added in an amount corresponding to 50 to 1200 ppm (based on calcium metal).

VII) According to I) to VI), in step (ii-2), the annealing may preferably include a first annealing step of adding a lithium precursor to a pre-washed cathode active material and performing annealing and a second annealing step of adding calcium or a calcium compound after first annealing and performing annealing.

VIII) According to I) to VII), in step (ii-2), the annealing may be preferably performed at 270 to 1000 °C.

IX) According to I) to VIII), in step (ii-2), the washing solution may be preferably water or a basic aqueous lithium compound solution.

X) According to I) to IX), in step (ii-2), the pre-washing may preferably include mixing the recovered cathode active material and the washing solution and performing filtration.

XI) According to I) to X), the cathode active material that has undergone step (ii-2) may preferably include 50 to 1200 ppm of calcium.

XII) According to I) to XI), the heat treatment of step (i) and the reheating treatment and/or annealing of step (ii) may be preferably performed under an air atmosphere or under an oxygen atmosphere.

XIII) According to I) to XII), the cathode active material may preferably include one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.

XIV) According to I) to XIII), the method of recycling a cathode active material may preferably include (iii) pre-washing the cathode active material reheat-treated in step (ii-1) with a washing solution.

XV) According to I) to XIV), the method of recycling a cathode active material may preferably include (iv) adding a lithium precursor to the cathode active material reheat-treated in step (ii-1) and performing annealing.

XVI) According to I) to XV), the lithium precursor may preferably include one or more selected from the group consisting of LiOH, $Li_2CO_3$, $LiNO_3$, and $Li_2O$.

XVII) According to I) to XVI), the lithium precursor of annealing step (iv) may preferably be added in at least an amount corresponding to a decrease in a molar ratio of lithium in the cathode active material of step (ii-1) based on an amount of lithium in a cathode active material in a raw material.

XVIII) According to I) to XVII), in the step (iv), the annealing may be preferably performed at 400 to 1000 °C.

XIX) According to I) to XVIII), the lithium precursor of step (ii-2) may be preferably added in at least an amount corresponding to a decrease in a molar ratio of lithium in the cathode active material of step (i) based on an amount of lithium in the pre-washed cathode active material.

XX) According to I) to XIX), the method of recycling a cathode active material may preferably include post-washing the cathode active material annealed in in step (ii-2) with a washing solution.

XXI) According to I) to XX), the method of recycling a cathode active material may preferably include coating a surface of the annealed cathode active material.

XXII) In accordance with another aspect of the present invention, provided is a cathode active material including one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material; containing $CaF_2$ or 50 to 1200 ppm of calcium; and having a residual F component in a content of 2000 ppm or less.

XXIII) According to XXII), a surface of the cathode active material may be preferably coated with a coating agent containing a metal or carbon.

XXIV) According to XXII) or XXIII), the metal may be preferably boron (B), tungsten (W), or a mixture thereof.

XXV) According to XXII) to XXIV), the cathode active material may be preferably a recycled cathode active material.

[Advantageous Effects]

According to the present invention, the present invention has an effect of providing a method of recycling a cathode active material. According to the method of the present invention, by heat-treating a waste cathode including a current collector and a cathode active material layer coated on the current collector to recover a cathode active material and adding calcium or a calcium compound to the recovered cathode active material and performing reheating treatment, or pre-washing the recovered cathode active material, adding a lithium precursor and calcium or a calcium compound thereto, and performing annealing, a cathode active material having excellent efficiency, lifespan characteristics, and resistance characteristics can be provided. In addition, environmental friendliness can be achieved by not using acids in recovery and recycling processes, and process costs can be reduced as neutralization and wastewater treatment are not required. In addition, the cathode active material is recycled without decomposition, so there are no discarded metal elements. In addition, since no organic solvents are used, the generation of toxic gases or explosions can be prevented, and economic efficiency and productivity can be greatly improved.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a drawing showing cathode scraps discarded after cutting an electrode plate from a cathode sheet.
FIG. 2 is a flowchart for explaining a process for recycling a cathode active material according to one embodiment of the present invention.
FIG. 3 is a graph showing the initial capacity evaluation results for each of the recycled cathode active materials prepared in Examples 1 to 4 and Comparative Examples 1 and 2.
FIG. 4 is a graph showing the change in capacity retention and resistance increase rate (DCIR) according to the number of cycles (Cycle No.) as the results of the coin cell evaluation conducted on each of the recycled cathode active materials prepared in Examples 1 to 4 and Comparative Examples 1 and 2.

FIG. 5 is a flowchart for explaining a process for recycling a cathode active material according to one embodiment of the present invention.

FIG. 6 is a graph showing the change in capacity retention according to the number of cycles (Cycle No.) as the results of the coin half cell evaluation conducted on each of the recycled or fresh cathode active materials prepared in Additional Examples 1 and 2, Additional Comparative Example 1, and Additional Reference Example.

FIG. 7 is a graph showing the change in capacity retention according to the number of cycles (Cycle No.) as the results of the coin half cell evaluation conducted on each of the recycled or fresh cathode active materials prepared in Additional Examples 2 to 4 and Additional Reference Example.

FIG. 8 is a graph showing the change in capacity retention according to the number of cycles (Cycle No.) as the results of the coin half cell evaluation conducted on each of the recycled or fresh cathode active materials prepared in Additional Examples 1 and 5 and Additional Reference Example.

FIG. 9 is a graph showing the change in capacity retention according to the number of cycles (Cycle No.) as the results of the coin half cell evaluation conducted on each of the recycled or fresh cathode active materials prepared in Additional Examples 1 and 6 to 9 and Additional Reference Example.

FIG. 10 is a graph showing the change in capacity retention according to the number of cycles (Cycle No.) as the results of the coin half cell evaluation conducted on each of the recycled or fresh cathode active materials prepared in Additional Example 10, Additional Comparative Example 1, and Additional Reference Example.

[Best Mode]

The present inventors confirmed that, while researching a direct recycling method to obtain a recycled cathode active material having excellent battery performance by directly recycling a cathode active material from a waste cathode without decomposing the cathode active material, when a waste cathode including a current collector and a cathode active material layer coated on the current collector was heat-treated to recover a cathode active material, and calcium or a calcium compound were added to the recovered cathode active material and reheating treatment was performed, or the recovered cathode active material was subjected to pre-washing, a lithium precursor and calcium or a calcium compound were added thereto, and annealing was performed, the efficiency, lifespan characteristics, and resistance characteristics of secondary batteries were improved. Based on these results, the present inventors conducted further studies to complete the present invention.

Hereinafter, each step of a method of recycling a cathode active material according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

## Method of recycling cathode active material

The method of recycling a cathode active material of the present invention includes step (i) of heat-treating a waste cathode in which a cathode active material layer is formed on a current collector to thermally decompose a binder and conductive material in the cathode active material layer, separate the current collector from the cathode active material layer, and recover a cathode active material in the cathode active material layer; and step (ii) including step (ii-1) of adding calcium or a calcium compound to the recovered cathode active material and performing reheating treatment at 600 to 750 °C or step (ii-2) of pre-washing the recovered cathode active material with a washing solution, adding a lithium precursor and calcium or a calcium compound thereto, and performing annealing. In this case, the efficiency, lifespan characteristics, and resistance characteristics of secondary batteries may be excellent, and environmental friendliness may be achieved by not using additional acids. Thus, process costs may be reduced as neutralization and wastewater treatment are not required, and the cathode active material is recycled without decomposition, so there are no discarded metal elements. In addition, a current collector may be recovered without melting the current collector. In addition, since no organic solvents are used, the generation of toxic gases or explosions may be prevented. In addition, mass production is possible by using easy-to-manage processes such as heat treatment or sedimentation. Accordingly, a cathode active material prepared by the method may have excellent electrochemical performance, resistance characteristics, and capacity characteristics.

Hereinafter, each step of the method of recycling a cathode active material will be described in detail.

**(i) Recovering cathode active material from waste cathode**

The method of recycling a cathode active material according to the present invention may include step (a) of recovering a cathode active material from a waste cathode, preferably a step of heat-treating a waste cathode in which a cathode active material layer is formed on a current collector to thermally decompose a binder and conductive material in the cathode active material layer, separate the current collector from the cathode active material layer, and recover a cathode active material in the cathode active material layer. In this case, a simple process may be implemented, and a binder, a conductive material, and a current collector may be completely removed.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (i) may preferably include a cathode active material, a binder, and a conductive material.

The cathode active material may include preferably one or more selected from the group consisting of a lithium cobalt oxide such as $LiCoO_2$ (hereinafter referred to as "LCO") ; a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below.

[Chemical Formula 1] $\qquad Li_aNi_xMn_yCo_zM_wO_{2+\delta}$

In Chemical Formula 1, M includes one or more selected from the group consisting of B, W, Al, Ti, and Mg, $1 < a \le 1.1$, $0 < x < 0.95$, $0 < y < 0.8$, $0 < z < 1.0$, $0 \le w \le 0.1$, $-0.02 \le \delta \le 0.02$, and

$$x+y+z+w=1.$$

For example, based on 100 mol% in total of metals other than lithium (Li), the cathode active material may include nickel (Ni) in an amount of 60 mol% or more, preferably 80 mol% or more, more preferably 81 mol% or more, still more preferably 81 to 95 mol%, still more preferably 85 to 95 mol%. Within this range, initial discharge capacity, rate performance, capacity characteristics, and resistance characteristics may be excellent.

In the present disclosure, the nickel content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the nickel content.

For example, the conductive material may be a carbon-based conductive material, preferably carbon black, carbon nanotubes (CNTs), or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment may be performed under an air atmosphere or under an oxygen atmosphere. In this case, since the binder and conductive material are removed by thermal decomposition into $CO_2$ and $H_2O$, the cathode active material is separated from the current collector, and the separated cathode active material may be easily sorted in powder form.

For example, the purity of the oxygen atmosphere may be 59 % or more, preferably 70 % or more, more preferably 80 % or more, still more preferably 90 % or more, still more preferably 90 to 99 %. Within this range, the binder and conductive material may be completely removed.

The purity (%) of the oxygen may be expressed as volume% or mol%.

The purity of oxygen in the present invention may be measured without particular limitations using measurement methods commonly used in the technical field to which the present invention pertains.

The heat treatment temperature may be preferably 300 to 650 °C, more preferably 400 to 600 °C, more preferably 500 to 600 °C, still more preferably 530 to 600 °C. Within this range, since a current collector is not melted and only a binder is removed, a cathode active material may be easily separated from the current collector.

For example, the heat treatment time may be performed for 10 minutes to 10 hours, preferably 30 minutes to 7 hours, more preferably 30 minutes to 5 hours, still more preferably 30 minutes to 3 hours, still more preferably 1 hour to 3 hours, still more preferably 2 hours to 3 hours. Within this range, since a current collector is not melted and only a binder is removed, a cathode active material may be easily separated from the current collector.

In the present disclosure, the heat treatment time is time of heat treatment performed at the corresponding heat treatment temperature, and does not include time required to reach the corresponding heat treatment temperature.

For example, the heat treatment may be performed at a temperature increase rate of 1 to 20 °C/min, preferably 3 to 10 °C/min ○⏄, more preferably 3 to 7 °C/min. Within this range, heat treatment may be performed without causing strain to heat treatment equipment, and thermal shock to cathode scraps may be prevented.

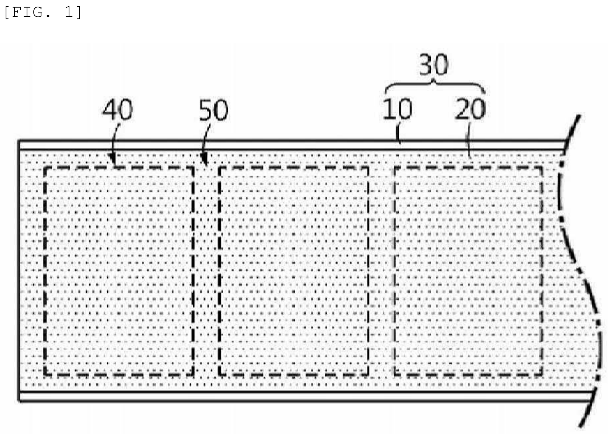

FIG. 1 below is a drawing showing cathode scraps discarded after cutting an electrode plate from a cathode sheet.

Referring to FIG. 1, Aluminum foil 10, which is a long sheet-shaped cathode current collector, is coated with a cathode active material layer 20 including a cathode active material, a conductive material, and a binder to obtain a cathode sheet 30. Then, a cathode plate 40 is obtained by blanking the cathode sheet 30 to a certain size. At this time, portions remaining after the blanking are the cathode scraps 50. The blanking may be a means for cutting the cathode sheet.

In addition, the cathode active material layer 20 is formed by coating the aluminum foil 10 with slurry obtained by mixing a cathode active material, a conductive material, a binder, and a solvent. Since the slurry is very sensitive to environmental factors such as temperature, it is very difficult to determine the coating conditions. Accordingly, waste cathode sheets are generated in significant quantities until the conditions for manufacturing the cathode sheet 30 of desired quality are determined through a predetermined test.

For reference, in the examples below, cathode scraps were used as waste cathodes.

**(ii) (ii-1) Adding calcium or a calcium compound to the recovered cathode active material and performing reheating treatment at 600 to 750 °C; or (ii-2) pre-washing the recovered cathode active material with a washing solution, adding a lithium precursor and calcium or a calcium compound thereto, and performing annealing**

The method of recycling a cathode active material according to the present invention may include step (ii) including step (ii-1) of adding calcium or a calcium compound to the recovered cathode active material and performing reheating treatment at 600 to 750 °C or step (ii-2) of pre-washing the recovered cathode active material with a washing solution, adding a lithium precursor and calcium or a calcium compound thereto, and performing annealing. In this case, a cathode active material having excellent efficiency, lifespan characteristics, and resistance characteristics may be provided.

In the present disclosure, pre-washing refers to washing performed before annealing, and post-washing refers to washing performed after annealing.

(ii-1) Adding calcium or a calcium compound to the recovered cathode active material and performing reheating treatment at 600 to 750 °C

Step (ii-1) of reheat-treating the recovered cathode active material may be preferably a step of adding calcium or a calcium compound to the recovered cathode active material and performing reheating treatment at 600 to 750 °C. In this case, a cathode active material having excellent efficiency, lifespan characteristics, and resistance characteristics may be provided.

The calcium compound is a compound capable of providing calcium metal. For example, the calcium compound may include one or more of $Ca(OH)_2$, CaO, and $Ca(NO_3)_2$, preferably $Ca(OH)_2$, $Ca(NO_3)_2$, or, a mixture thereof, more preferably $Ca(OH)_2$. In this case, a cathode active material having excellent efficiency, lifespan characteristics, and resistance characteristics may be provided. In the case of $Ca(OH)_2$, there is an advantage of further reducing residual fluorine (F).

During the heat treatment in step (i), the binder and conductive material in the cathode active material are converted into $CO_2$ and $H_2O$, vaporized, and removed. In this process, the $CO_2$ and $H_2O$ may react with lithium on the surface of the cathode active material to form $Li_2CO_3$ and LiOH. Fluorine (F) present in a binder such as PVdF may react with metal elements constituting the cathode active material to form LiF or metal fluorides. When LiF or metal fluorides remain, the battery characteristics deteriorate when the active material is reused.

In the reheating treatment of step (ii-1), preferably, when calcium or a calcium compound is added and then reheating treatment is performed, LiF or metal fluoride present in the cathode active material reacts with calcium and is converted into a lithium compound and $CaF_2$. In the subsequent process, the lithium compound acts as a lithium precursor, and the $CaF_2$ is contained in the cathode active material to improve efficiency, lifespan characteristics, and resistance characteristics.

For example, when $Ca(OH)_2$ is used as a calcium compound in the reheating treatment step, the reaction process is as shown in Chemical Formula 2.

[Chemical Formula 2]  $\qquad$ $2LiF + Ca(OH)_2 \rightarrow 2LiOH + CaF_2$

In Chemical Formula 2, LiOH generated after reheating treatment may act as a lithium precursor in the subsequent step of introducing a lithium precursor and annealing, thereby reducing the content of lithium precursor introduced in the annealing step.

In addition, in Chemical Formula 2, $CaF_2$ generated after reheating treatment is contained in the cathode active material, which improves efficiency, lifespan characteristics, and resistance characteristics.

For example, based on 1 mol of an F component present in the cathode active material recovered after heat treatment of step (i), the calcium or calcium compound may be added in an amount corresponding to 0.03 to 0.4 mol (based on calcium metal), preferably 0.04 to 0.3 mol, more preferably 0.05 to 0.25 mol, still more preferably 0.07 to 0.23 mol, still more preferably 0.07 to 0.20 mol, still more preferably 0.10 to 0.15 mol. Within this range, LiF or metal fluoride is sufficiently converted into $CaF_2$ and the lithium compound, thereby improving the efficiency, lifespan characteristics, and resistance characteristics of the cathode active material.

For example, the reheating treatment of step (ii-1) may be performed at 600 to 750 °C, preferably 630 to 730 °C, more preferably 670 to 730 °C. Within this range, the reaction with LiF or the metal fluoride may occur smoothly.

The reheating treatment temperature of step (ii-1) may preferably be higher than the heat treatment temperature of step (i). In this case, calcium or a calcium compound may readily react with LiF or a metal fluoride generated in the cathode active material.

For example, the reheating treatment of step (ii-1) may be performed for 5 to 15 hours, preferably 6 to 13 hours, more preferably 7 to 12 hours, still more preferably 8 to 12 hours. Within this range, LiF or metal fluoride is sufficiently converted into $CaF_2$ and the lithium compound, thereby improving the efficiency, lifespan characteristics, and resistance characteristics of the cathode active material.

For example, the reheating treatment of step (ii-1) may be performed under an air atmosphere or under an oxygen atmosphere, preferably under an air atmosphere. In this case, LiF or a metal fluoride may be sufficiently converted into $CaF_2$ and a lithium compound.

For example, based on 1 mol of an F component (based on F element) measured for the cathode active material recovered after heat treatment of step (i), the cathode active material after the reheating treatment of step (ii-1) may include $CaF_2$ at a concentration of 0.03 to 0.4 mol, preferably 0.04 to 0.3 mol, more preferably 0.05 to 0.25 mol, still more preferably 0.07 to 0.23 mol, still more preferably 0.07 to 0.20 mol, still more preferably 0.10 to 0.15 mol. Within this range, the efficiency, lifespan characteristics, and resistance characteristics of secondary batteries may be excellent.

In the present disclosure, the F component and $CaF_2$ contents may be measured by ion chromatography (IC) commonly used in the technical field to which the present invention pertains. For example, XRD analysis or ICP analysis may be used. As a specific example, an ion chromatography (IC)-inductively coupled plasma (ICP) analyzer, an IC-ICP-MS analyzer, or an IC-ICP-AEC analyzer may be used.

(ii-2) Pre-washing the recovered cathode active material with a washing solution, adding a lithium precursor and calcium or a calcium compound thereto, and then performing annealing

The method of recycling a cathode active material according to the present invention may include step (ii-2) of pre-washing the recovered cathode active material with a washing solution, adding a lithium precursor and calcium or a calcium compound thereto, and then performing annealing. In this case, by washing, metal fluorides such as LiF present on the surface of the recycled cathode active material may be removed and the surface may be modified, thereby improving the rate performance of a battery. In addition, by annealing, crystallinity may be improved, that is, the crystallinity may be increased or the crystal structure may be restored. Thus, due to the calcium component, a cathode active material having excellent efficiency, lifespan characteristics, and resistance characteristics may be provided.

When the heat treatment of step (i) is performed, the binder and conductive material inside the cathode active material are converted to $CO_2$ and $H_2O$ and vaporized and removed. During this process, $CO_2$ and $H_2O$ react with lithium on the surface of the cathode active material to form $Li_2CO_3$ and LiOH, and fluorine (F) present in a binder such as PVdF reacts with the metal element that constitutes the cathode active material to form LiF or metal fluoride. When LiF or metal fluoride remains, battery characteristics deteriorate when the cathode active material is reused.

For example, the washing solution of the pre-washing may be water or a basic aqueous lithium compound solution, preferably water. In this case, an F component remaining on the surface of the recycled cathode active material may be completely removed with a small amount of washing solution, which may significantly reduce wastewater generation and improve the rate performance of a battery.

The water may be preferably distilled water or deionized water, more preferably distilled water. In this case, metal fluorides such as LiF remaining on the surface of the cathode active material may be removed, and an excellent surface modification effect may be obtained.

The basic aqueous lithium compound solution may preferably include a lithium compound in an amount of greater than 0 % by weight and 15 % by weight or less, more preferably greater than 0 % by weight and 10 % by weight or less. In this case, metal fluorides such as LiF that tend to remain on the surface of the cathode active material are removed, thereby modifying the surface. In addition, lithium that may be eluted during the washing process may be supplemented without eluted transition metals existing in the cathode active material. When the lithium compound is included in an amount exceeding the range, even after washing, excess LiOH may remain on the surface of the cathode active material, which may have a negative effect on the subsequent annealing process.

For example, the lithium compound may be LiOH, $LiNO_3$, or a mixture thereof, preferably LiOH. In this case, fluorine (F) on the surface of the cathode active material and the lithium precursor that did not participate in the reaction may be removed.

The pre-washing may preferably include a step of mixing the recovered cathode active material and the washing solution and performing filtration, more preferably a step of mixing the recovered cathode active material and the washing solution, performing filtration, adding a rinse solution to the filtered cathode active material, and performing rinsing. In this case, the residual F component may be easily removed, and the rate performance of a battery may be improved. In addition, by reducing the total amount of washing solution and rinse solution, the amount of wastewater, wastewater treatment costs, and environmental pollution may be reduced.

In the present disclosure, the rinse solution may follow the definition used in the technical field to which the present invention belongs and is identical to the washing solution unless otherwise defined.

For example, the weight ratio of the recovered cathode active material to the washing solution may be 1:1 to 1:30, preferably 1:1 to 1:20, more preferably 1:3 to 1:15, still more preferably 1:5 to 1:12. Within this range, metal fluorides such as LiF may be effectively removed, thereby improving battery performance.

For example, the agitator may be an impeller-type, magnetic-type, and/or ultrasonic agitator, without being limited thereto.

For example, the stirring may be performed at 200 to 1000 rpm, preferably 300 to 800 rpm, more preferably 400 to 700 rpm. Within this range, metal fluorides may be effectively removed.

For example, the stirring may be performed for 3 to 20 minutes, preferably 5 to 15 minutes, more preferably 7 to 12 minutes. Within this range, metal fluorides may be effectively removed.

For example, the filtration may be performed by using reduced pressure filtration using a filter or a filter press.

For example, the weight ratio of the recovered cathode active material to the rinse solution may be 1:1 to 1:30, preferably 1:1 to 1:20, more preferably 1:3 to 1:15, still more preferably 1:5 to 1:12. Within this range, metal fluorides such as LiF may be effectively removed, thereby improving battery performance.

The pre-washing may preferably include the process of collecting the cathode active material in the solid fraction after the filtration or rinsing and drying the cathode active material. In this case, the subsequent annealing process may be optimized and easily performed.

The drying may be performed at preferably 50 to 200 °C, more preferably 50 to 150 °C, still more preferably 70 to 150 °C, still more preferably 100 to 150 °C until the weight stops changing, for example, for 1 to 24 hours. Within this range, moisture contained in the washed cathode active material may be effectively removed.

For example, the calcium compound may include one or more of $Ca(OH)_2$, CaO, and $Ca(NO_3)_2$, preferably $Ca(OH)_2$, $Ca(NO_3)_2$, or a mixture thereof, more preferably $Ca(OH)_2$. In this case, a cathode active material having excellent efficiency, lifespan characteristics, and resistance characteristics may be provided.

For example, based on a weight of the recovered cathode active material, the calcium compound may be added in an amount corresponding to 50 to 1200 ppm (based on calcium metal), preferably 100 to 1000 ppm (based on calcium metal), more preferably 200 to 800 ppm (based on calcium metal), still more preferably 300 to 700 ppm (based on calcium metal), still more preferably 330 to 650 ppm (based on calcium metal). Within this range, a cathode active material having excellent efficiency, lifespan characteristics, and resistance characteristics may be provided.

In the present disclosure, % and ppm are based on weight unless otherwise specified.

The lithium precursor may preferably include one or more selected from the group consisting of LiOH, $Li_2CO_3$, $LiNO_3$, and $Li_2O$.

Preferably, based on the amount of lithium in the recovered cathode active material, the lithium precursor may be added in at least an amount corresponding to a reduced amount of lithium in the pre-washed cathode active material of step (ii-2). As a specific example, when the recovered cathode active material of step (ii-2) is the cathode active material represented by Chemical Formula 1, based on 1 molar ratio of lithium in the cathode active material, the lithium precursor may be added in an amount corresponding to the molar ratio of 0.0001 to 0.2 of lithium, preferably an amount corresponding to the molar ratio of 0.001 to 0.2 of lithium, more preferably an amount corresponding to the molar ratio of 0.005 to 0.19 of lithium, still more preferably an amount corresponding to the molar ratio of 0.01 to 0.18 of lithium, still more preferably an amount corresponding to the molar ratio of 0.05 to 0.17 of lithium, most preferably an amount corresponding to the molar ratio of 0.09 to 0.16 of lithium. Within this range, crystallinity may be improved, that is, the crystallinity may be increased or the crystal structure may be restored. Thus, the battery characteristics of the recycled cathode active material may be improved.

As another example, based on 100 mol% in total of lithium included the cathode active material as a raw material, the lithium precursor may be added in an amount corresponding to 1 to 40 mol%, preferably 1 to 30 mol%, more preferably 1 to 25 mol%, still more preferably 5 to 20 mol%, still more preferably 7 to 11 mol%. Within this range, since there is no residual precursor that causes an increase in the resistance of the recycled cathode active material, battery characteristics may be improved. In addition, economic advantages may be obtained because the crystal structure may be recovered using a smaller amount of lithium precursor than conventional methods.

The annealing of step (ii-2) may include a step of adding a lithium precursor and calcium or a calcium compound to the pre-washed cathode active material and performing annealing, may include a first annealing step of adding a lithium precursor to the pre-washed cathode active material and performing annealing and a second annealing step of adding calcium or a calcium compound after first annealing and performing annealing, or may include a first annealing step of adding calcium or a calcium compound to the pre-washed cathode active material and performing annealing and a second annealing step of adding a lithium precursor after the first annealing and performing annealing. In this case, crystallinity may be improved, that is, the crystallinity may be increased or the crystal structure may be restored. In addition, due to the calcium component, a cathode active material having excellent efficiency, lifespan characteristics, and resistance characteristics may be provided.

The annealing (ii-2) may be preferably a step of adding a lithium precursor and calcium or a calcium compound to the washed cathode active material and performing annealing, under the oxygen ($O_2$) or air atmosphere, at 270 to 1000 °C, more preferably 400 to 1000 °C, still more preferably 600 to 900 °C, still more preferably 650 to 800 °C, still more preferably 670 to 750 °C. In this case, the crystallinity of the cathode active material may be improved, that is, the crystallinity may be increased or the crystal structure may be restored. Thus, the battery characteristics of the recycled cathode active material may be improved.

The annealing temperature may be controlled within a limited range depending on the melting points of a lithium precursor and calcium or a calcium compound. For example, the melting point of $Li_2CO_3$ is 723 °C, and annealing may be performed at preferably 700 to 900 °C, more preferably 710 to 780 °C. The melting point of LiOH is 462 °C, and annealing may be performed at preferably 400 to 800 °C, more preferably 500 to 700 °C. The melting point of $Ca(OH)_2$ is 580 °C, and annealing may be performed at preferably 400 to 800 °C, more preferably 450 to 750 °C, still more preferably 470 to 720 °C, still more preferably 500 to 700 °C. Within this range, a crystal structure may be recovered, and thus the rate performance of a battery may be excellent.

The annealing temperature may preferably be a temperature exceeding the melting point of the lithium precursor and calcium or the calcium compound. However, when the annealing temperature exceeds 1000 °C, thermal decomposition of the cathode active material may occur, which may result in a deterioration in battery performance. Accordingly, an annealing temperature of 1000 °C or lower may be desirable.

In step (ii-2), when a first annealing step of adding a lithium precursor to a pre-washed cathode active material and performing annealing and a second annealing step of adding calcium or a calcium compound after first annealing and performing annealing are performed as the annealing, the annealing temperatures in the first annealing step and the second annealing step may be set the same or different. Preferably, the annealing temperature of the first annealing step may be equal to or higher than the melting point of the lithium precursor, and the annealing temperature of the second annealing step may be equal to or higher than the melting point of the calcium or calcium compound. More preferably, the first annealing may be performed at 450 to 900 °C, still more preferably 550 to 800 °C, still more preferably 650 to 750 °C, and the second annealing may be performed at preferably 270 to 850 °C, more preferably 400 to 800 °C, still more preferably 450 to 750 °C, still more preferably 470 to 720 °C, still more preferably 500 to 700 °C. Within this range, the crystal structure of the recycled cathode active material may be recovered. In addition, due to the calcium component, efficiency, lifespan characteristics, and resistance characteristics may be excellent.

In step (ii-2), when a first annealing step of adding calcium or a calcium compound to the pre-washed cathode active material and performing annealing and a second annealing step of adding a lithium precursor after the first annealing and performing annealing are performed as the annealing, the annealing temperatures in the first annealing step and the second annealing step may be set the same or different. Preferably, the first annealing step may be performed above the melting point of the calcium or calcium compound, and the second annealing step may be performed above the melting point of the lithium precursor. Specifically, the first annealing may be performed at preferably 270 to 850 °C, more preferably 400 to 800 °C, still more preferably 450 to 750 °C, still more preferably 470 to 720 °C, still more preferably 500 to 700 °C, and the second annealing may be performed at preferably 450 to 900 °C, still more preferably 550 to 800 °C, still more preferably 650 to 750 °C. Within this range, the crystal structure of the recycled cathode active material may be recovered. In addition, due to the calcium component, efficiency, lifespan characteristics, and resistance characteristics may be excellent.

For example, when the lithium precursor and the calcium and calcium compound are added and annealing is performed, the annealing time may be preferably 1 to 15 hours, more preferably 3 to 13 hours, still more preferably 5 to 13 hours, still more preferably 7 to 11 hour. Within this range, the crystal structure may be sufficiently recovered. In addition, due to the calcium component, efficiency, lifespan characteristics, and resistance characteristics may be improved.

For example, when the lithium precursor is added and the first annealing is performed, and then the calcium and calcium compound are added and the second annealing is performed, the first annealing time may be preferably 1 to 15 hours, more preferably 3 to 13 hours, still more preferably 5 to 13 hours, still more preferably 7 to 12 hours, and the second annealing time may be preferably 1 to 15 hours, more preferably 3 to 13 hours, still more preferably 5 to 13 hours, still more preferably 7 to 12 hours. Within this range, the crystal structure may be sufficiently recovered. In addition, due to the calcium component, efficiency, lifespan characteristics, and resistance characteristics may be improved.

For example, when the calcium and calcium compound are added and the first annealing is performed, and then the lithium precursor is added and the second annealing is performed, the first annealing time may be preferably 1 to 15 hours, more preferably 3 to 13 hours, still more preferably 5 to 13 hours, still more preferably 7 to 12 hours, and the second annealing time may be preferably 1 to 15 hours, more preferably 3 to 13 hours, still more preferably 5 to 13 hours, still more preferably 7 to 12 hours. Within this range, the crystal structure may be sufficiently recovered. In addition, due to the calcium component, efficiency, lifespan characteristics, and resistance characteristics may be improved.

The annealing temperature may preferably be reached at a heating rate of 1 to 10 °C/min, more preferably 1 to 5 °C/min, still more preferably 2 to 4 °C/min. In this case, the crystallinity of the recycled cathode active material may be further increased, thereby improving the battery characteristics of the recycled cathode active material.

For example, the annealing step includes a cooling process, which may, as a specific example, be natural cooling within a furnace. In this case, the crystallinity of the recycled cathode active material may be further increased, thereby improving the battery characteristics of the recycled cathode active material.

For example, the cooling process may be performed by cooling to a temperature of 130 °C or lower, preferably 110 °C or lower, more preferably 20 to 110 °C. Within this range, the crystallinity of the recycled cathode active material may be further increased, thereby improving the battery characteristics of the recycled cathode active material.

For example, in the annealing step, the second annealing may be performed after the first annealing step and then the cooling process. In this case, the crystal structure of the recycled cathode active material may be recovered, and efficiency, lifespan characteristics, and resistance characteristics may be excellent.

In the present disclosure, annealing may follow the definition used in the technical field to which the present invention pertains. As a specific example, annealing may be defined as a heat treatment operation that heals deformation or lattice defects and increases crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

For example, the annealed cathode active material may include calcium in an amount of 50 to 1200 ppm, preferably 100 to 1000 ppm, more preferably 150 to 800 ppm, still more preferably 200 to 800 ppm, still more preferably 300 to 700 ppm, still more preferably 330 to 700 ppm, still more preferably 330 to 650 ppm. Within this range, efficiency, lifespan characteristics, and resistance characteristics may be excellent.

In the present disclosure, the calcium content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used. In the present disclosure, the ion chromatography (IC)-inductively coupled plasma (ICP) analyzer may be preferably used.

(iii) Pre-washing the reheat-treated cathode active material (Surface modification step)

The method of recycling a cathode active material according to the present invention may include step (iii) of pre-washing the reheat-treated cathode active material. In this case, the residual F component and residual Li compound that did not react with calcium or a calcium compound that may exist on the surface of the recycled cathode active material may be removed, and the surface may be modified, which improves the rate performance of a battery.

For example, the washing solution of the washing step may be water or a basic aqueous lithium compound solution, preferably water. In this case, the F component and Li compound remaining on the surface of the reheat-treated cathode active material may be completely removed, significantly reducing wastewater generation and greatly improving the rate performance of a battery.

The water may be preferably distilled water or deionized water, more preferably distilled water. In this case, metal fluorides such as LiF remaining on the surface of the cathode active material may be removed, and an excellent surface modification effect may be obtained.

The basic aqueous lithium compound solution may include a lithium compound in an amount of preferably greater than 0 % by weight and 15 % by weight or less, more preferably greater than 0 % by weight and 10 % by weight or less. In this case, metal fluorides such as LiF remaining on the surface of the cathode active material may be removed, and the surface may be modified. In addition, elution of transition metals present in the cathode active material may be prevented, and lithium that may be eluted during the washing process may be supplemented. When the lithium compound is included in an amount exceeding the range, an excess of LiOH may remain on the surface of the active material even after washing, which may affect the subsequent annealing process.

For example, the lithium compound may be LiOH, LiNO$_3$, or a mixture thereof, preferably LiOH. In this case, fluorine (F) and a lithium precursor not used in the reaction may be removed from the surface of the cathode active material.

Preferably, the pre-washing step may include a step of stirring the reheat-treated cathode active material with the washing solution and then performing filtration, more preferably a step of stirring the reheat-treated cathode active material with the washing solution and performing filtration and a step of adding a rinse solution to the filtered cathode active material and performing rinsing. In this case, the residual F component and residual Li compound that did not react with calcium or a calcium compound may be easily removed, and the rate performance of a battery may be improved. In addition, by reducing the total amount of washing solution and rinse solution, the amount of wastewater, wastewater treatment costs, and environmental pollution may be reduced.

For example, the weight ratio of the reheat-treated cathode active material to the washing solution may be 1:1 to 1:30, preferably 1:1 to 1:20, more preferably 1:3 to 1:15, still more preferably 1:5 to 1:12. Within this range, the F component and Li compound remaining on the surface of the cathode active material may be effectively removed.

For example, the agitator may be an impeller-type, magnetic-type, and/or ultrasonic agitator, without being limited thereto.

For example, the stirring may be performed at 200 to 1000 rpm, preferably 300 to 800 rpm, more preferably 400 to 700 rpm. Within this range, metal fluorides may be effectively removed.

For example, the stirring may be performed for 3 to 20 minutes, preferably 5 to 15 minutes, more preferably 7 to 12 minutes. Within this range, the F component and Li compound remaining on the surface of the cathode active material may be effectively removed.

For example, the filtration may be performed by using reduced pressure filtration using a filter or a filter press.

For example, the rinse solution may be water or a basic aqueous lithium compound solution, preferably water. In this case, the F component and Li compound remaining on the surface of the reheat-treated cathode active material may be completely removed, significantly reducing wastewater generation and greatly improving the rate performance of a battery.

For example, the weight ratio of the reheat-treated cathode active material to the rinse solution may be 1:1 to 1:30, preferably 1:1 to 1:20, more preferably 1:3 to 1:15, still more preferably 1:5 to 1:12. Within this range, the F component and Li compound remaining on the surface of the reheat-treated cathode active material may be effectively removed, and thus battery performance may be improved.

The pre-washing step may preferably include a process of collecting the cathode active material in the solid fraction after the filtration or rinsing and drying the cathode active material. In this case, the subsequent annealing process or surface coating process may be optimized and easily performed.

The drying may be performed at preferably 50 to 200 °C, more preferably 50 to 150 °C, still more preferably 70 to 150 °C, still more preferably 100 to 150 °C until the weight stops changing, for example, for 1 to 24 hours. Within this range, moisture contained in the washed cathode active material may be effectively removed.

<u>(iv) Adding lithium precursor to washed cathode active material and performing annealing</u>

For example, the method of recycling a cathode active material according to the present invention may include step (iv) of adding a lithium precursor to the pre-washed cathode active material or reheat-treated cathode active material and performing annealing. In this case, a cathode active material having excellent initial discharge capacity, rate performance, capacity characteristics, and resistance characteristics may be provided.

Annealing step (iv) may be preferably a step of adding a lithium precursor to the pre-washed cathode active material and performing annealing under the oxygen (O$_2$) or air atmosphere at 400 to 1000 °C, more preferably 600 to 900 °C. In this case, the crystallinity of the cathode active material may be improved, that is, the crystallinity may be increased or the crystal structure may be restored. Thus, the battery characteristics of the recycled cathode active material may be improved.

The lithium precursor may preferably include one or more selected from the group consisting of LiOH, Li$_2$CO$_3$, LiNO$_3$, and Li$_2$O.

The lithium precursor may be preferably added in an amount corresponding to the reduced amount of lithium based on an amount of lithium in the cathode active material of step (ii-1) based on the amount of lithium in the cathode active material as a raw material. As a specific example, the cathode active material subjected to the reheating treatment of step (ii-1) is the cathode active material represented by Chemical Formula 1, based on 1 molar ratio of lithium in the cathode active material, the lithium precursor may be added in an amount corresponding to a molar ratio of lithium of 0.0001 to 0.2, preferably 0.001 to 0.2, more preferably 0.005 to 0.19, still more preferably 0.01 to 0.18, still more preferably 0.05 to 0.17, most preferably 0.09 to 0.16. Within this range, by supplementing lithium in the recycled cathode active material, crystallinity may be increased, or a crystal structure may be recovered, thereby improving crystallinity. Thus, the battery characteristics of the recycled cathode active material may be improved.

As another example, the lithium precursor may be added in an amount corresponding to 1 to 40 mol%, preferably 1 to 30 mol%, more preferably 7 to 20 mol% based on 100 mol% in total of lithium contained in the cathode active material as a raw material. Within this range, since there is no residual precursor that causes an increase in the resistance of the recycled cathode active material, battery characteristics may be improved. In addition, economic advantages may be obtained because the crystal structure may be recovered using a smaller amount of lithium precursor than conventional methods.

The annealing temperature may be adjusted within a limited range according to the melting point of the lithium precursor. For example, in the case of $Li_2CO_3$ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature may be preferably a temperature exceeding the melting point of the lithium precursor. However, when the annealing temperature exceeds 1000 °C, thermal decomposition of the cathode active material may occur, resulting in deterioration of battery performance. Accordingly, the annealing temperature is preferably 1000 °C or lower.

For example, the annealing time may be preferably 1 to 15 hours, more preferably 2 to 10 hours, still more preferably 3 to 8 hours, still more preferably 4 to 6 hours, as a specific example, about 5 hours. Within this range, the crystal structure may be sufficiently recovered, and economic benefits may be obtained.

The annealing temperature may preferably be reached at a heating rate of 1 to 10 °C/min, more preferably 1 to 5 °C/min, still more preferably 2 to 4 °C/min. In this case, the crystallinity of the recycled cathode active material may be further increased, thereby improving the battery characteristics of the recycled cathode active material.

For example, the annealing step may include a cooling process. As a specific example, the cooling process may be performed through natural cooling within a furnace. In this case, the crystallinity of the recycled cathode active material may be further increased, thereby improving the battery characteristics of the recycled cathode active material.

(v) Post-washing the annealed cathode active material with a washing solution

The method of recycling a cathode active material according to the present invention may include step (v) of post-washing the annealed cathode active material with a washing solution. In this case, the F component and/or lithium compound that does not participate in the reaction and remains on the surface of the cathode active material after the addition of lithium precursor may be removed, thereby improving battery characteristics.

For example, the washing solution may be water, preferably distilled water or deionized water. In this case, by removing the F component and lithium compound that tend to remain on the surface of the cathode active material, wastewater treatment is not required and the rate performance of a battery may be significantly improved.

In the post-washing, the annealed cathode active material may be mixed with the washing solution, and then may be washed by reduced pressure filtration or filter press. In this case, by removing the F component and lithium compound that are likely to remain on the surface of the cathode active material, wastewater treatment is not required and the rate performance of a battery may be significantly improved.

For example, in the post-washing, the weight ratio of the cathode active material to the washing solution may be 1:1 to 1:5, preferably 1:1 to 1:3, more preferably 1:1 to 1:2. Within this range, the residual lithium compound and calcium or calcium compound that are likely to remain on the surface of the cathode active material may be removed. Thus, wastewater treatment is not required and the rate performance of a battery may be significantly improved.

For example, the post-washed recycled cathode active material may have a residual F content of 2000 ppm or less, preferably 1800 ppm or less, more preferably 1700 ppm or less, still more preferably 1600 ppm or less, more preferably 1300 ppm or less, still more preferably 1000 ppm or less, still more preferably 700 ppm or less, as a most preferred example, 500 ppm or less, as a more preferred example, 300 ppm or less. In this case, the rate performance of a battery may be improved, and electrochemical performance, resistance characteristics, and capacity characteristics may be excellent.

In the present disclosure, the residual F content refers to the content of all F components present in other residual components as well as LiF.

(vi) Coating the surface of the annealed or post-washed cathode active material to obtain a reusable cathode active material

The method of recycling a cathode active material according to the present invention optionally includes step (vi) of coating the surface of the annealed or post-washed cathode active material to obtain a reusable cathode active material. In this case, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then may be heat-treated at 100 to 1200 °C, more preferably 200 to 1000 °C, still more preferably 250 to 800 °C. In this case, structural stability and electrochemical performance may be improved while maintaining the intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 100 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The heat treatment time may be preferably 1 to 16 hours, more preferably 3 to 7 hours. Within this range, structural stability and electrochemical performance may be improved while maintaining the intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 $m^2$/g, more preferably an average diameter of 10 to 100 nm and a specific surface area of 20 to 100 $m^2$/g. Within this range, the coating agent may be uniformly adhered to the surface of the cathode active material, thereby improving the structural stability of the cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

**Recycled cathode active material**

A recycled cathode active material of the present invention is prepared by the method of recycling a cathode active material. In this case, the rate performance of a battery may be improved, and electrochemical performance, resistance characteristics, and capacity characteristics may be excellent.

In addition, the cathode active material of the present invention may include one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material, and may include $CaF_2$. In this case, the efficiency, lifespan characteristics, and resistance characteristics of secondary batteries may be excellent.

Based on 1 mol of an F component (based on F element) present in the recovered cathode active material after heat treatment, the cathode active material may preferably include $CaF_2$ in an amount of 0.03 to 0.4 mol, more preferably 0.04 to 0.3 mol, still more preferably 0.05 to 0.25 mol, still more preferably 0.07 to 0.20 mol, still more preferably 0.10 to 0.15 mol. Within this range, the efficiency, lifespan characteristics, and resistance characteristics of secondary batteries may be excellent.

In addition, the recycled cathode active material may preferably include one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material, may include calcium in an amount of 50 to 1200 ppm, and may include a residual F component in a content of 2000 ppm or less. In this case, the efficiency, lifespan characteristics, and resistance characteristics of secondary batteries may be excellent.

The recycled cathode active material may preferably include calcium in an amount of 100 to 1000 ppm, more preferably 150 to 800 ppm, still more preferably 200 to 800 ppm, still more preferably 300 to 700 ppm, still more preferably 330 to 650 ppm. Within this range, the efficiency, lifespan characteristics, and resistance characteristics of secondary batteries may be excellent.

The recycled cathode active material may preferably have a residual F content of 2000 ppm or less, more preferably 1800 ppm or less, still more preferably 1700 ppm or less, still more preferably 1600 ppm or less, still more preferably 1300 ppm or less, still more preferably 1000 ppm or less, as a most preferred example, 700 ppm or less, as a more preferred example, 300 ppm or less. In this case, the rate performance of a battery may be improved, and electrochemical performance, resistance characteristics, and capacity characteristics may be excellent. In the present disclosure, the residual F content refers to the content of all F components present in other residual components as well as LiF.

For example, based on 100 mol% in total of metals other than lithium (Li), the cathode active material may include nickel (Ni) in an amount of 60 mol% or more, preferably 80 mol% or more, more preferably 81 mol% or more, still more preferably 81 to 95 mol%, still more preferably 85 to 95 % by weight. Within this range, initial discharge capacity, rate performance, capacity characteristics, and resistance characteristics may be excellent.

As another specific example, the recycled cathode active material may be a compound represented by Chemical Formula 1 below.

$$[\text{Chemical Formula 1}] \qquad Li_aNi_xMn_yCo_zM_wO_{2+\delta}$$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. In this case, electrochemical performance, resistance characteristics, and capacity characteristics may be excellent.

For example, the surface of the cathode active material may be coated with a metal or carbon, preferably a metal. In this case, the structural stability of the cathode active material may be improved without changing the intrinsic chemical and physical properties of the cathode active material, thereby improving electrochemical properties such as rate performance, lifespan characteristics, and capacity. In addition, the amount of residual lithium and the pH may be reduced by replacing the elements on the surface of the cathode active material with heterogeneous elements, thereby improving the physicochemical properties.

The metal may preferably include one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, based on 1 mol% of metals in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The surface coating may be preferably performed by coating the surface with a coating agent containing at least one of a metal, an organic metal, and a carbon component in a solid or liquid manner and performing heat treatment at 100 to 1200 °C, more preferably 200 to 1000 °C, still more preferably 250 to 800 °C. In this case, structural stability and electrochemical performance may be improved while maintaining the intrinsic properties of the cathode active material.

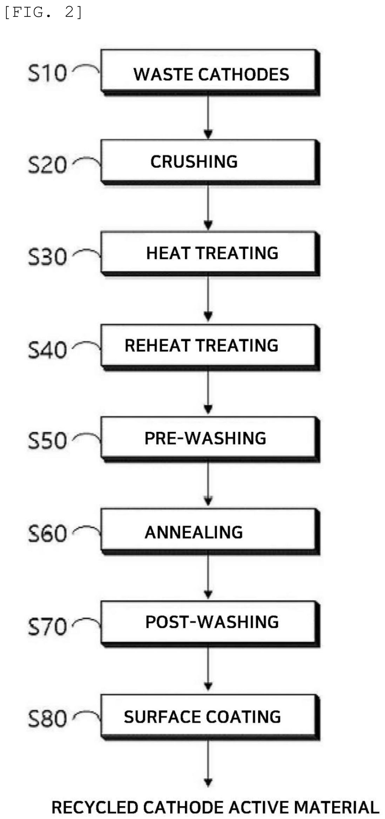

FIG. 2 below is a flowchart for explaining a process for recycling a cathode active material according to one embodiment of the present invention.

Referring to FIG. 2, first, cathode scraps as waste cathodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes aluminum foil and a cathode active material layer formed on the aluminum foil. After volatilizing a solvent, the cathode active material layer has a structure in which a cathode active material and a conductive material are combined by a binder.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the crushed cathode scraps are heat-treated to recover a cathode active material (step S30). Here, heat treatment is performed to thermally decompose a binder and a conductive material within a cathode active material layer.

Through the heat treatment under an air atmosphere, the binder and the conductive material in the cathode active material layer are thermally decomposed into $CO_2$ and $H_2O$ and removed. Since the binder is removed, the cathode active material may be separated from a cathode active material layer.

It is important that the heat treatment is performed under an air atmosphere or under an oxygen atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and $CO_2$, and disappears.

The heat treatment is performed at preferably 300 to 650 °C, as a specific example, 590 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to cathode scraps may be prevented.

The heat treatment may be performed until the binder is completely thermally decomposed. For example, the heat treatment may be performed for preferably 30 minutes or more, more preferably 30 minutes to 15 hours, as a specific example, about 2 hours. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air. For example, After cooling to room temperature, the cathode active material is recovered.

In the present disclosure, room temperature may be any point within the range of 20 ± 5 °C.

For example, the recovered cathode active material may be pulverized by sieving. Preferably, sieving may be performed using a sieve of 270 to 400 mesh, more preferably a sieve of 300 to 350 mesh. In this case, the subsequent reheating treatment step may be performed smoothly.

Next, calcium or a calcium compound is added to the recovered cathode active material, and reheating treatment is performed (step S40).

By performing the reheating treatment, LiF or metal fluorides generated on the surface of the cathode active material in the heat treatment step (step S30) are converted into a lithium compound and $CaF_2$ by adding calcium or a calcium compound. Thus, the lithium compound acts as a lithium precursor in the subsequent process, and the $CaF_2$ is contained in the cathode active material, thereby improving efficiency, lifespan characteristics, and resistance characteristics.

For example, the calcium compound may include one or more of $Ca(OH)_2$, $Ca(NO_3)_2$, and $CaO$, preferably one or more of $Ca(OH)_2$ and $Ca(NO_3)_2$, for example, $Ca(OH)_2$. In this case, a cathode active material having excellent efficiency, lifespan characteristics, and resistance characteristics may be provided.

For example, in the step S40, the reheating treatment may be performed at 600 to 750 °C, for example, 700 °C. Within this range, calcium or a calcium compound may react smoothly with LiF or the metal fluoride.

For example, in the step S40, the reheating treatment may be performed for 5 to 15 hours, for example, about 10 hours. Within this range, calcium or a calcium compound may react smoothly with LiF or the metal fluoride.

For example, in the step S40, the reheating treatment may be performed under an air atmosphere or under an oxygen atmosphere. In this case, LiF or a metal fluoride may be sufficiently converted into $CaF_2$ and a lithium compound.

Next, in the washing step (hereinafter also referred to as 'pre-washing'), i.e., a surface modification step, the reheat-treated cathode active material is washed with a washing solution (step S50).

By performing the pre-washing step, foreign substances generated on the surface of the cathode active material in the reheating treatment step (step S40) may be effectively removed.

The pre-washing step may be preferably a step of stirring the reheat-treated cathode active material with a washing solution and performing filtration. According to one embodiment, the pre-washing step may include a step of stirring the reheat-treated cathode active material with a washing solution and performing filtration and a step of adding a rinse solution to the filtered cathode active material and performing rinsing. Here, the agitator may be an impeller-type, magnetic-type, and/or ultrasonic agitator, without being limited thereto. However, when the viscosity of slurry is high or the amount of slurry is large, an impeller-type agitator capable of transmitting large force may be desirable.

For example, the washing solution may be water or a basic aqueous lithium compound solution. When it is necessary to replenish the amount of lithium that may be eluted from the cathode active material during the washing process, a basic aqueous lithium compound solution is preferable.

The water may be preferably distilled water or deionized water.

For example, the basic aqueous lithium compound solution may include an alkaline lithium compound in an amount of greater than 0 % by weight and 15 % by weight or less. When the lithium compound is not included, it is difficult to replenish lithium. When the amount exceeds 15 % by weight, an excessive amount of lithium compound may remain on the surface of the cathode active material, which may adversely affect the subsequent annealing process.

Specifically, the lithium compound may be LiOH.

For example, the washing solution may be water, and may be used in an amount of 1 to 30 times, preferably 5 to 12 times, more preferably about 10 times the weight of the reheat-treated cathode active material.

For example, the stirring may be performed at 200 to 1000 rpm, preferably 400 to 600 rpm. Within this range, the reduction in battery capacity due to excessive lithium extraction may be prevented.

For example, the stirring may be performed for 3 to 20 minutes, preferably 5 to 15 minutes. Within this range, the reduction in battery capacity due to excessive lithium extraction may be prevented.

For example, the filtration may be performed by using reduced pressure filtration using a filter or a filter press.

For example, the rinse solution may be water or a basic aqueous lithium compound solution, preferably water.

The rinse solution may be used in an amount of 1 to 30 times, preferably about 10 times of the weight of the reheat-treated cathode active material.

For example, the rinsed cathode active material solids may be dried using an oven (convection type) at 50 to 150 °C in air or under vacuum.

In the pre-washing step (step S50), the residual F component and Li compound that did not react with calcium or a calcium compound present on the surface of the recycled cathode active material in the reheating treatment step (step S40) are removed, and the surface is modified. Thus, the efficiency, lifespan characteristics, and resistance characteristics of the cathode active material may be excellent.

Next, a lithium precursor is added to the pre-washed cathode active material or reheat-treated cathode active material, and annealing is performed (step S60).

In addition, loss of lithium in the cathode active material occurs during the preceding step S30, S40, or S50. In step S60, the loss amount of lithium is supplemented, and calcium or a calcium compound is included in the cathode active material. In addition, during the preceding step, a deformed structure (e.g., $Co_3O_4$ in the case of an LCO active material) may be formed on the surface of the cathode active material. In step S60, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples. In addition, since the cathode active material contains calcium or a calcium compound, the lifespan characteristics and resistance characteristics of the recycled cathode active material may be improved.

The lithium precursor may include one or more of LiOH, $Li_2CO_3$, $LiNO_3$, and $Li_2O$, preferably, LiOH.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added.

For example, when the molar ratio of lithium to other metals (M) in a fresh cathode active material is 1, the lithium precursor may be added in an amount such that the molar ratio of lithium is 0.001 to 0.4, preferably 0.01 to 0.4, more preferably 0.09 to 0.2. As a specific example, when the lithium precursor is added at a molar ratio, which corresponds to a loss ratio relative to a lithium content in a fresh cathode active material, based on ICP analysis results, the capacity may be increased to a level equivalent to that of the fresh cathode active material. Here, the ICP analysis results have an error value of about $\pm 0.02$.

For example, based on 100 mol% in total of lithium included in the washed cathode active material, the lithium precursor may be added in an amount corresponding to 1 to 40 mol%, preferably 1 to 30 mol%, more preferably 1 to 25 mol%, still more preferably 5 to 20 mol%, still more preferably 7 to 11 mol%. Within this range, since there is no residual precursor that causes an increase in the resistance of the recycled cathode active material, battery characteristics may be improved.

For example, the annealing may be performed in air at 400 to 1000 °C, preferably at 600 to 900 °C. In this case, the temperature should be determined within a limited range according to the types of the lithium precursor.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When $Li_2CO_3$ is used as the lithium precursor, the annealing temperature is preferably 700 to 900 °C, more preferably 710 to 780 °C, still more preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 hour or more, more preferably 15 hours or less, still more preferably 4 to 6 hours. When the annealing time is long, a crystal structure may be sufficiently recovered, but even long-term annealing does not significantly affect performance. In this case, the same or similar equipment as in step S30 of performing heat treatment may be used as the annealing equipment.

The annealing temperature may be reached at a heating rate of preferably 1 to 10 °C/min, as a specific example, 2 to 4 °C/min. In this case, the crystallinity of the recycled cathode active material may be further increased, thereby improving the battery characteristics of the recycled cathode active material.

Next, as the post-washing, the annealed cathode active material is mixed with a washing solution, stirring is performed, and then filtration is performed (step S70).

The post-washing of step 70 is a process to remove lithium compounds remaining in the cathode active material after annealing.

The post-washing of step S70 is preferably performed in the same manner as the washing step (step S50) described above, except that the washing solution is used in a minimum amount (e.g., 1 to 2 times the weight of the cathode active material) and no rinsing is performed. Accordingly, the description of the overlapping part will be omitted.

Next, as an optional step, a step of coating the surface of the post-washed cathode active material may be performed (step S80).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the annealed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

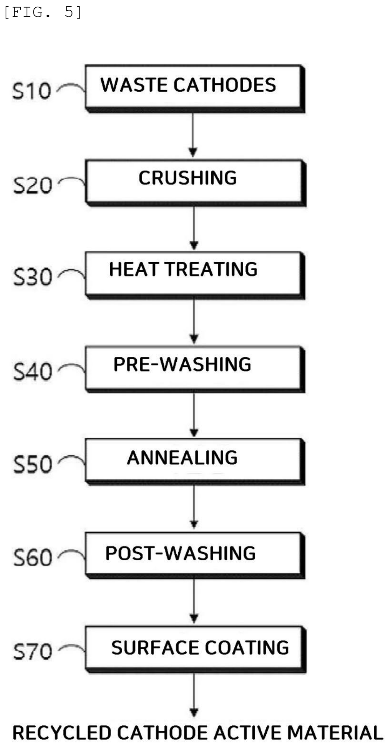

In addition, FIG. 5 below is a flowchart for explaining a process for recycling a cathode active material according to another embodiment of the present invention.

Referring to FIG. 5, first, cathode scraps as waste cathodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes a cathode active material layer formed on the aluminum foil. After volatilizing a solvent, the cathode active material layer has a structure in which a cathode active material and a conductive material are combined by a binder.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the crushed cathode scraps are heat-treated to recover a cathode active material (step S30). Here, heat treatment is performed to thermally decompose a binder and a conductive material within a cathode active material layer.

Through the heat treatment under an air atmosphere, the binder and the conductive material in the cathode active material layer are thermally decomposed into $CO_2$ and $H_2O$ and removed. Since the binder is removed, the cathode active material may be separated from a cathode active material layer.

It is important that the heat treatment is performed under an air atmosphere or under an oxygen atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and $CO_2$, and disappears.

The heat treatment is performed at preferably 300 to 650 °C, as a specific example, 590 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to cathode scraps may be prevented.

The heat treatment may be performed until the binder is completely thermally decomposed. For example, the heat treatment may be performed for preferably 30 minutes or more, more preferably 30 minutes to 5 hours, as a specific example, about 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, in the washing step (hereinafter also referred to as 'pre-washing'), i.e., a surface modification step, the recovered cathode active material is washed with a washing solution (step S40).

By performing the pre-washing step, foreign substances generated on the surface of the cathode active material in the heat treatment step (step S30) may be effectively removed.

The pre-washing step may be preferably a step of mixing the recovered cathode active material and the washing solution and performing filtration. According to one embodiment, the pre-washing step may include a step of mixing the recovered cathode active material and the washing solution and performing filtration and a step of adding a rinse solution to the filtered cathode active material and performing rinsing. Here, the agitator may be an impeller-type, magnetic-type, and/or ultrasonic agitator, without being limited thereto. However, when the viscosity of slurry is high or the amount of slurry is large, an impeller-type agitator capable of transmitting large force may be desirable.

For example, the washing solution may be water or a basic aqueous lithium compound solution. When it is necessary to replenish the amount of lithium that may be eluted from the cathode active material during the washing process, a basic aqueous lithium compound solution is preferable.

The water may be preferably distilled water or deionized water.

For example, the basic aqueous lithium compound solution may include an alkaline lithium compound in an amount of greater than 0 % by weight and 15 % by weight or less. When the lithium compound is not included, it is difficult to replenish lithium. When the amount exceeds 15 % by weight, an excessive amount of lithium compound may remain on the surface of the cathode active material, which may adversely affect the subsequent annealing process.

Specifically, the lithium compound may be LiOH.

For example, the washing solution may be water, and may be used in an amount of 1 to 30 times, preferably 5 to 12 times, more preferably about 10 times the weight of the recovered cathode active material.

For example, the stirring may be performed at 200 to 1000 rpm, preferably 400 to 600 rpm. Within this range, the reduction in battery capacity due to excessive lithium extraction may be prevented.

For example, the stirring may be performed for 3 to 20 minutes, preferably 5 to 15 minutes. Within this range, the reduction in battery capacity due to excessive lithium extraction may be prevented.

For example, the filtration may be performed by using reduced pressure filtration using a filter or a filter press.

The rinse solution may be used in an amount of 5 to 20 times, preferably about 10 times of the weight of the recovered cathode active material.

For example, the rinsed cathode active material solids may be dried using an oven (convection type) at 50 to 150 °C in air or under vacuum.

In the pre-washing step (step S40), in the process where the binder and conductive material inside the cathode active material layer are vaporized into $CO_2$ and $H_2O$ and removed in the heat treatment step (step S30), LiF or metal fluorides generated when $Li_2CO_3$ and LiOH generated by reacting with lithium and F present in the binder, such as PVdF, react with lithium or other metals constituting the cathode active material are removed, thereby preventing the deterioration of battery characteristics when reusing the cathode active material.

Next, a lithium precursor and calcium or a calcium compound are added to the pre-washed cathode active material, and annealing is performed (step S50).

In addition, loss of lithium in the cathode active material occurs during the preceding steps S30 and S40. In step S50, the loss amount of lithium is supplemented, and calcium or a calcium compound is included in the cathode active material. In addition, during the preceding step, a deformed structure (e.g., $Co_3O_4$ in the case of an LCO active material) may be formed on the surface of the cathode active material. In step S50, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples. In addition, since the cathode active material contains calcium or a calcium compound, the lifespan characteristics and resistance characteristics of the recycled cathode active material may be improved.

The lithium precursor may include one or more of LiOH, $Li_2CO_3$, $LiNO_3$, and $Li_2O$, preferably, LiOH.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added.

For example, when the molar ratio of lithium to other metals (M) in a fresh cathode active material is 1, the lithium precursor may be added in an amount such that the molar ratio of lithium is 0.001 to 0.4, preferably 0.01 to 0.4, more preferably 0.09 to 0.2. As a specific example, when the lithium precursor is added at a molar ratio, which corresponds to a loss ratio relative to a lithium content in a fresh cathode active material, based on ICP analysis results, the capacity may be increased to a level equivalent to that of the fresh cathode active material. Here, the ICP analysis results have an error value of about $\pm 0.02$.

For example, based on 100 mol% in total of lithium included in the washed cathode active material, the lithium precursor may be added in an amount corresponding to 1 to 40 mol%, preferably 1 to 30 mol%, more preferably 1 to 25 mol%, still more preferably 5 to 20 mol%, still more preferably 7 to 11 mol%. Within this range, since there is no residual precursor that causes an increase in the resistance of the recycled cathode active material, battery characteristics may be improved.

For example, the calcium compound may include one or more of $Ca(OH)_2$, CaO, and $Ca(NO_3)_2$, preferably $Ca(OH)_2$. In this case, a cathode active material having excellent efficiency, lifespan characteristics, and resistance characteristics may be provided.

For example, based on a weight of the recovered cathode active material, the calcium compound may be added in an amount corresponding to 50 to 1200 ppm (based on calcium metal), preferably 100 to 1000 ppm (based on calcium metal), more preferably 200 to 800 ppm (based on calcium metal), still more preferably 300 to 700 ppm (based on calcium metal), still more preferably 330 to 650 ppm (based on calcium metal). Within this range, a cathode active material having excellent efficiency, lifespan characteristics, and resistance characteristics may be provided.

For example, in the annealing of step 50, a lithium precursor and calcium or a calcium compound may be added to the pre-washed cathode active material, and annealing may be performed. In this case, the crystal structure of the recycled cathode active material may be improved. In addition, due to the contained calcium or calcium compound, lifespan characteristics and resistance characteristics may be improved, and process efficiency may be increased.

As another example, the annealing of step 50 may include a first annealing step of adding a lithium precursor to a pre-washed cathode active material and performing annealing and a second annealing step of adding calcium or a calcium compound after first annealing and performing annealing. In this case, the crystal structure of the recycled cathode active material may be improved. In addition, since the calcium or calcium compound is contained in a cathode active material, a cathode active material having excellent efficiency, lifespan characteristics, and resistance characteristics may be provided.

As another example, the annealing of step 50 may include a first annealing step of adding calcium or a calcium compound to the pre-washed cathode active material and performing annealing and a second annealing step of adding a lithium precursor thereto after the first annealing and performing annealing. In this case, the crystal structure of the recycled cathode active material may be improved. In addition, since the calcium or calcium compound is contained in a cathode active material, a cathode active material having excellent efficiency, lifespan characteristics, and resistance characteristics may be provided.

The annealing of step 50 may be preferably a step of adding a lithium precursor and calcium or a calcium compound to the washed cathode active material and performing annealing at 270 to 1000 °C, for example, about 700 °C under the oxygen ($O_2$) or air atmosphere. In this case, crystallinity improvement, such as increasing the crystallinity of the cathode active material or restoring the crystal structure, may be achieved. In addition, since the calcium or calcium compound is contained in a cathode active material, the battery characteristics of the recycled cathode active material may be improved.

The annealing temperature is preferably a temperature exceeding the melting point of the lithium precursor and calcium or the calcium compound. However, since performance degradation occurs due to thermal decomposition of the cathode active material at a temperature exceeding 1000 °C, the annealing temperature should not exceed 1000 °C. When $Li_2CO_3$ is used as the lithium precursor, the annealing temperature is preferably 700 to 900 °C, more preferably 710 to 780 °C, still more preferably 750 to 780 °C. In addition, when LiOH is used as the lithium precursor, the annealing temperature is preferably 400 to 600 °C, more preferably 450 to 480 °C, most preferably 470 to 480 °C. In addition, when $Ca(OH)_2$ is used as the calcium or calcium compound, the annealing temperature may be preferably 550 to 800 °C, more preferably 650 to 750 °C, still more preferably 670 to 720 °C.

For example, in the annealing of step 50, when a first annealing step of adding a lithium precursor to a pre-washed cathode active material and performing annealing and a second annealing step of adding calcium or a calcium compound after first annealing and performing annealing are implemented separately, the temperatures of the first annealing step and the second annealing step may be set to be the same or different. Preferably, the first annealing step may be performed above the melting point of the lithium precursor, and the second annealing step may be performed above the melting point of the calcium or calcium compound. More preferably, the first annealing may be performed at 450 to 900 °C, for example, about 700 °C, and the second annealing may be performed at 270 to 850 °C, for example, 500 to 700 °C. Within this range, the crystal structure of the cathode active material may be recovered. In addition, since the calcium or calcium compound is contained in a cathode active material, efficiency, lifespan characteristics, and resistance characteristics may be excellent.

As another example, in the annealing of step 50, when the first annealing step of adding calcium or a calcium compound to the pre-washed cathode active material and performing annealing and the second annealing step of adding a lithium precursor thereto after the first annealing and performing annealing are implemented separately, the temperatures of the first annealing step and the second annealing step may be set to be the same or different. Preferably, the first annealing step may be performed above the melting point of the calcium or calcium compound, and the second annealing step may be performed above the melting point of the lithium precursor. More preferably, the first annealing may be performed at 270 to 850 °, for example, 500 to 700 °C, and the second annealing may be performed at 450 to 900 °C, for example, about 700 °C. Within this range, the crystal structure of the cathode active material may be recovered. In addition, since the calcium or calcium compound is contained in a cathode active material, efficiency, lifespan characteristics, and resistance characteristics may be excellent.

For example, the annealing time should be 1 hour or more, preferably 15 hours or less, and specifically, 7 to 11 hour. When the annealing time is long, the crystal structure may be sufficiently recovered and a uniform coating may be achieved, but long-term annealing does not have a significant effect on performance. At this time, the annealing equipment may be the same or similar equipment as in heat treatment step S30.

The annealing temperature may be reached at a heating rate of preferably 1 to 10 °C/min, as a specific example, 2 to 4 °C/min. In this case, the crystallinity of the recycled cathode active material may be further increased, thereby improving the battery characteristics of the recycled cathode active material.

For example, the annealing of step 50 includes a cooling process, which may, as a specific example, be natural cooling within a furnace. In this case, the crystallinity of the recycled cathode active material may be further increased, thereby improving the battery characteristics of the recycled cathode active material.

In the annealing step (step 50), preferably, after the first annealing and the cooling process, the second annealing may be performed. In this case, the crystal structure may be recovered. In addition, since the calcium or calcium compound is contained in a cathode active material, efficiency, lifespan characteristics, and resistance characteristics may be excellent.

For example, the cooling process may be performed at 130 °C or lower, for example, about 100 °C. Within this range, the crystallinity of the recycled cathode active material may be further increased, thereby improving the battery characteristics of the recycled cathode active material.

Next, as a post-washing step, the annealed cathode active material is mixed with a washing solution, stirring is performed, and then filtration is performed (step S60).

The post-washing of step 60 is a process to remove lithium compounds remaining in the cathode active material after annealing.

The post-washing of step S60 is preferably performed in the same manner as the washing step (step S40) described above, except that the washing solution is used in a minimum amount (e.g., 1 to 2 times the weight of the cathode active material) and no rinsing is performed. Accordingly, the description of the overlapping part will be omitted.

Next, as an optional step, a step of coating the surface of the post-washed cathode active material may be performed (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the annealed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

## Secondary battery

A secondary battery of the present invention includes the recycled cathode active material prepared using the method of recycling a cathode active material. In this case, the rate performance of a battery may be greatly improved, and electrochemical performance, resistance characteristics, and capacity characteristics may be excellent.

The secondary battery of the present invention may include all of the contents of the cathode active material and the method of recycling a cathode active material described above. Accordingly, redundant description thereof is omitted.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

After blanking a cathode plate, discarded cathode scraps (current collector: aluminum foil, cathode active material: NCM-based lithium composite transition metal oxide, the mol ratio of Ni:Co:Mn:Al is 88:7:4:1) were crushed, and the crushed scraps were heat-treated at 590 °C for 2 hours in air to remove a binder and a conductive material and separate a current collector and a cathode active material. Through these processes, the cathode active material was recovered. At this time, temperature was increased to the heat treatment temperature at a temperature increase rate of 5 °C/min, and air was supplied at a rate of 3 L/min.

The content of LiF generated in the recovered cathode active material was measured, and $Ca(OH)_2$ was added so that the amount corresponds to 0.13 mol of Ca per 1 mol of F component, and reheating treatment was performed at 700 °C in air for 10 hours. At this time, the temperature increase rate was 2 °C/min until the reheating treatment temperature was reached, and air was supplied at 3 L/min.

In the present disclosure, the cathode active material LiF content, $CaF_2$ content, and the like were measured using an ICP analyzer. At this time, an ICP analysis device commonly used in laboratories may be used, but there is no difference depending on measurement devices or methods.

Example 2

The same procedure as Example 1 was performed, except that $Ca(OH)_2$ was added in an amount corresponding to 0.05 mol of Ca per 1 mol of F component in the reheating treatment step of Example 1.

Example 3

The same procedure as Example 1 was performed, except that $Ca(OH)_2$ was added in an amount corresponding to 0.2 mol of Ca per 1 mol of F component in the reheating treatment step of Example 1.

Example 4

The same procedure as Example 1 was performed, except that $Ca(NO_3)_2$ was added instead of $Ca(OH)_2$ in the reheating treatment step of Example 1.

Comparative Example 1

The same procedure as Example 1 was performed, except that the reheating treatment step was not performed.

Comparative Example 2

The same procedure as Example 1 was performed, except that the reheating treatment step was performed without adding $Ca(OH)_2$.

[Test Example I: Residual lithium content]

The residual lithium contents in the recycled cathode active materials obtained in Example 1 and Comparative Examples 1 and 2 were measured as follows, and the results are shown in Table 1 below.

* Residual lithium content: 5 g of a cathode active material was dispersed in 100 ml of distilled water, mixed at 300 rpm for 5 minutes, filtered to remove the cathode active material, and the resulting solution was titrated with 0.1 M HCl solution to measure the change in pH value to obtain a pH titration curve. The residual LiOH and $Li_2CO_3$ amounts in the cathode active material were calculated using the obtained pH titration curve.

[Table 1]

| Classification | LiOH (wt%) | $Li_2CO_3$ (wt%) | Sum (wt%) |
|---|---|---|---|
| Example 1 | 0.923 | 0.734 | 1.657 |
| Comparative Example 1 | 0.760 | 0.777 | 1.537 |
| Comparative Example 2 | 0.682 | 0.893 | 1.575 |

As shown in Table 1, compared to the recycled cathode active material (Comparative Example 1) that was not reheat-treated, the LiOH content in the recycled cathode active material (Example 1) that was reheat-treated after addition of $Ca(OH)_2$ was increased. These results were obtained because $Ca(OH)_2$ introduced in the reheating treatment step combined with LiF generated in the heat treatment step to generate LiOH.
In addition, compared to Example 1 and Comparative Example 1, the $Li_2CO_3$ content in the recycled cathode active material (Comparative Example 2) that was reheat-treated without adding $Ca(OH)_2$ was increased. These results were obtained because LiOH generated in the heat treatment step was converted to $Li_2CO_3$.

[Test Example II: CHC cell evaluation]

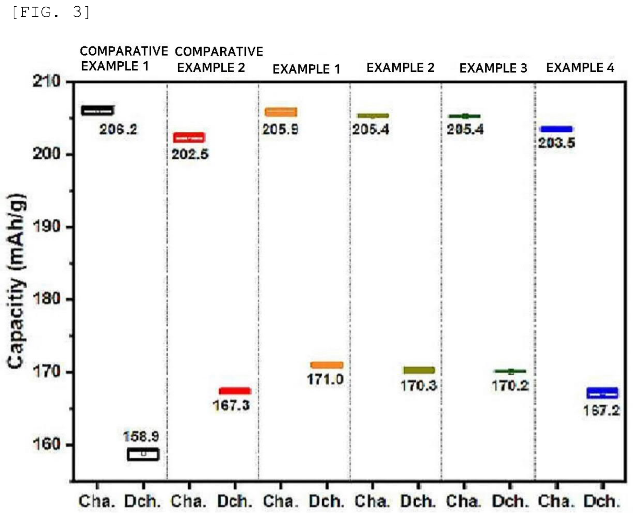

The electrochemical performance of the recycled cathode active materials obtained from Examples 1 to 4 and Comparative Examples 1 and 2 was measured through the following CHC cell evaluation, and the results are shown in Table 2 and FIG. 3.

* CHC cell manufacturing: 96 % by weight of a recycled cathode active material, 2 % by weight of carbon black as a conductive material, and 2 % by weight of PVdF as a binder were prepared and mixed with an NMP to obtain slurry. Aluminum foil was coated with the slurry to manufacture a cathode. Then, a cell (coin half cell, CHC) was manufactured. The electrochemical performance (charge capacity: CH, discharge capacity: DCH, and efficiency: Eff(%)) was evaluated under the conditions of ethylene carbonate (EC): dimethyl methyl carbonate (DMC) = 3:7 (weight ratio) as the electrolyte solution and other additives.

* Initial capacity (CH and DCH) evaluation of a cell: At 25 °C, one charge/discharge cycle was performed on each cell under the following conditions.

Charge (CH): 0.2C, CC/CV, 4.25V, 0.05C cut-off
Discharge (DCH): 0.2C, CC, 2.5V, cut-off

* Charge/discharge efficiency of cell (Eff): The charge/discharge efficiency was calculated using the following Equation 1 using the charge capacity and discharge capacity obtained from the initial capacity evaluation of the cell, and the results are shown in FIG. 3 below.

Charge/discharge efficiency (%) = [Discharge capacity (mAh/g) / charge capacity (mAh/g)] × 100     [Equation 1]

[Table 2]

| Classification | Initial charge capacity (mAh/g) | Initial discharge capacity (mAh/g) | Charge/discharge efficiency (%) |
|---|---|---|---|
| Comparative Example 1 | 206.2 | 158.9 | 77.1 |
| Comparative Example 2 | 202.5 | 167.3 | 82.6 |
| Example 1 | 205.9 | 171.0 | 83.1 |
| Example 2 | 205.4 | 170.3 | 82.9 |
| Example 3 | 205.4 | 170.2 | 82.9 |
| Example 4 | 203.5 | 167.2 | 82.2 |

As shown in Table 2 and FIG. 3 below, in the case of the recycled cathode active materials (Examples 1 to 4) that were reheat-treated after adding a calcium compound according to the present invention, compared to the recycled cathode active material (Comparative Example 1) that was prepared without the reheating treatment step and the cathode active material (Comparative Example 2) that was reheat-treated without adding a calcium compound, the initial charge capacity, initial discharge capacity, and/or charge/discharge efficiency were excellent. In addition, Examples 1 to 3 in which $Ca(OH)_2$ as the calcium compound was added were superior to Example 4 in which $Ca(NO_3)_2$ was added.

[Test Example III: Evaluation of high-temperature lifespan characteristics]

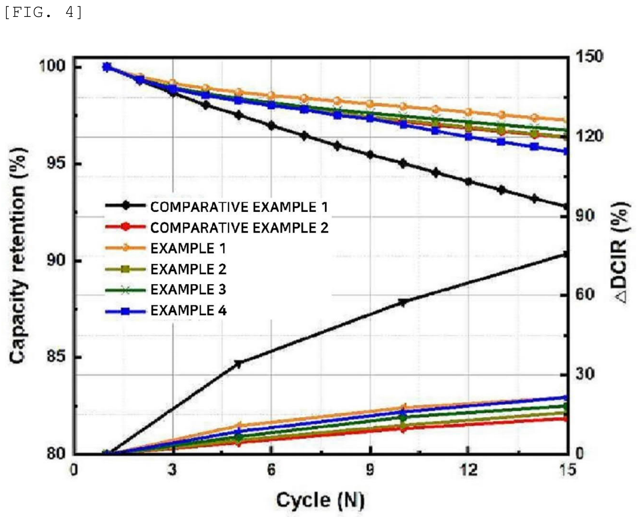

The capacity retention and resistance increase rate were measured using CHC cells manufactured from the recycled cathode active materials obtained from Examples 1 to 4 and Comparative Examples 1 and 2, and the results are shown in FIG. 4 below.

* Evaluation of high-temperature lifespan characteristics: At 45 °C, 15 charge/discharge cycles were performed on each cell under the following conditions, and the capacity retention and resistance increase rate (△DCIR) were calculated every 5 cycles using the following Equations 2 and 3, respectively, and the results are shown in FIG. 4.

Charge: 0.33C, CC/CV, 4.5V, 0.05C cut-off
Discharge: 0.33C, CC, 3.0V, 0.05C cut-off

Capacity retention (%) = (Discharge capacity after N cycles / Discharge capacity after 1 cycle) × 100     [Equation 2]

△DCIR = {(Resistance after N cycles / Resistance after 1 cycle) × 100} - 100     [Equation 3]

FIG. 4 below is a graph showing capacity retention and resistance increase rate according to the number of cycles (Cycle No.) as the evaluation results of lifespan characteristics of the recycled cathode active materials (Examples 1 to 4) that were reheat-treated after adding the calcium compound according to the present invention, the recycled cathode active material (Comparative Example 1) that was prepared without the reheating treatment step, and the cathode active material (Comparative Example 2) that was reheat-treated without adding the calcium compound.

Referring to FIG. 4, in the case of the cathode active materials (Examples 1 to 3) that were reheat-treated after adding $Ca(OH)_2$, compared to Comparative Examples 1 and 2, capacity retention was excellent. The capacity retention of the cathode active material (Example 4) that was reheat-treated after adding $Ca(NO_3)_2$ was superior to that of Comparative Example 1. In addition, the resistance increase rate of the cathode active materials of Examples 1 to 4 was lower than that of Comparative Example 1 and higher than that of Comparative Example 2. These results show that the resistance increase rate was slightly increased by the calcium component present in the cathode active material acting as a resistive layer.

[Additional Examples]

Additional Example 1

After blanking a cathode plate, discarded cathode scraps (current collector: aluminum foil, cathode active material: NCM-based lithium composite transition metal oxide (mol% ratio of Ni:Co:Mn:Al is 88:7:4:1)) were crushed, and the crushed cathode scraps were heat-treated at 550 °C for 30 minutes in air to remove a binder and a conductive material. Then, a current collector and a cathode active material were separated to recover the cathode active material. Here, the temperature increase rate was 5 °C/min to reach the heat treatment temperature, and air was supplied at 3 L/min.

The recovered cathode active material and distilled water (hereinafter referred to as 'washing solution') were mixed in a weight ratio of 1:10, stirred at 500 rpm for 10 minutes, and only the cathode active material was extracted by reduced pressure filtration using a filter. The obtained cathode active material was rinsed with a rinse solution (same as the washing solution) in an amount 10 times the weight thereof and then vacuum-dried at 100 to 150 °C to obtain a washed cathode active material.

Based on the mol ratio (ICP analysis) of lithium to other metals in the cathode active material as a raw material (lithium molar ratio 1), based on a weight of the recovered cathode active material, LiOH (lithium precursor) in an amount corresponding to a lithium molar ratio of 0.10 to 0.15 and $Ca(OH)_2$ were added to pre-washed cathode active material in an amount corresponding to 350 ppm (based on calcium metal), and annealing was performed at 700 °C for 10 hours in air (Injection speed: 3 L/min). In theory, the Li molar ratio of fresh cathode active material is 1, but since the average error of the ICP equipment used to check this is $\pm 0.05$, preferably $\pm 0.02$, the Li molar ratio of the raw material active material measured through ICP may be $1\pm 0.05:1$. In this experiment, the lithium precursor was added based on the molar ratio measured through ICP analysis.

The annealed cathode active material and distilled water were mixed in a weight ratio of 1:1, stirred for 10 minutes under 500 rpm conditions, and then filtered (dehydrated) by reduced pressure filtration using a filter in the same manner as the previous pre-washing to obtain a cathode active material. The obtained cathode active material was vacuum-dried at 100 to 150 °C to obtain a cathode active material that underwent post-washing.

The post-washed cathode active material was coated with boric acid and then heated at 300 °C for 5 hours to produce the final recycled cathode active material. Here, boric acid was added in an amount corresponding to the amount lost in the previous process, the temperature increase rate was 2 °C/min until the heat treatment temperature was reached, and air was supplied at 3 L/min.

In the present disclosure, the molar ratio of lithium to other metals in the cathode active material was measured using an ICP analyzer. At this time, an ICP analysis device commonly used in laboratories may be used, but there is no difference depending on measurement devices or methods.

Additional Example 2

A recycled cathode active material was prepared using the same method as in Additional Example 1, except that the annealing step of Additional Example 1 was performed by adding a lithium precursor, performing first annealing at 700 °C for 10 hours, performing natural cooling to 100 °C in a furnace, adding $Ca(OH)_2$, and then performing second annealing at 700 °C for 10 hours.

Additional Example 3

A recycled cathode active material was prepared using the same method as in Additional Example 1, except that the annealing step of Additional Example 1 was performed by adding a lithium precursor, performing first annealing at 700 °C for 10 hours, performing natural cooling to 100 °C in a furnace, adding $Ca(OH)_2$, and then performing second annealing at 500 °C for 10 hours.

Additional Example 4

A recycled cathode active material was prepared using the same method as in Additional Example 1, except that the annealing step of Additional Example 1 was performed by adding a lithium precursor, performing first annealing at 700 °C for 10 hours, performing natural cooling to 100 °C in a furnace, adding $Ca(OH)_2$, and then performing second annealing at 300 °C for 10 hours.

Additional Example 5

A recycled cathode active material was prepared using the same method as in Additional Example 1, except that, in the annealing step of Additional Example 1, $Ca(NO_3)_2$ was used instead of $Ca(OH)_2$.

Additional Example 6

A recycled cathode active material was prepared using the same method as in Additional Example 1, except that, in the annealing step of Additional Example 1, $Ca(OH)_2$ was added in an amount corresponding to 100 ppm (based on calcium metal) based on a weight of the recovered cathode active material.

Additional Example 7

A recycled cathode active material was prepared using the same method as in Additional Example 1, except that, in the annealing step of Additional Example 1, $Ca(OH)_2$ was added in an amount corresponding to 200 ppm (based on calcium metal) based on a weight of the recovered cathode active material.

Additional Example 8

A recycled cathode active material was prepared using the same method as in Additional Example 1, except that, in the annealing step of Additional Example 1, $Ca(OH)_2$ was added in an amount corresponding to 600 ppm (based on calcium metal) based on a weight of the recovered cathode active material.

Additional Example 9

A recycled cathode active material was prepared using the same method as in Additional Example 1, except that, in the annealing step of Additional Example 1, $Ca(OH)_2$ was added in an amount corresponding to 1000 ppm (based on calcium metal) based on a weight of the recovered cathode active material.

Additional Example 10

A recycled cathode active material was prepared using the same method as in Additional Example 1, except that, in the annealing step of Additional Example 1, CaO was used instead of $Ca(OH)_2$.

Additional Comparative Example 1

A recycled cathode active material was prepared using the same method as in Additional Example 1, except that, in the annealing step of Additional Example 1, only the lithium precursor was added without adding $Ca(OH)_2$, and the annealing was performed.

Additional Reference Example

Instead of a recycled active material, a fresh NCM-based lithium composite transition metal oxide (mol% ratio of Ni:Co:Mn:Al is 88:7:4:1) was used.

[Additional Test Example I]

The characteristics of the recycled cathode active materials obtained from Additional Examples 1 to 5 and 10, Additional Comparative Example 1, and Additional Reference Example were measured by the following methods, and the results are shown in Table 3 below.

* ICP analysis: The calcium component content (mg/kg), the residual F component content (mg/kg), and the ratio of lithium (Li) to other metals (M) in the cathode active material were measured using an ICP analyzer. At this time, an ICP analysis device commonly used in laboratories may be used, but there is no difference depending on measurement devices or methods.

[Table 3]

| Classification | Calcium content (mg/kg) | Residual F component content (mg/kg) |
|---|---|---|
| Additional Example 1 | 350 | 220 |
| Additional Example 2 | 350 | 250 |
| Additional Example 3 | 350 | 270 |
| Additional Example 4 | 350 | 210 |
| Additional Example 5 | 350 | 350 |
| Additional Example 10 | 350 | 270 |
| Additional Comparative Example 1 | - | 280 |
| Additional Reference Example | - | - |

As shown in Table 3, the cathode active materials (Additional Examples 1 to 5 and 10) prepared by adding a lithium precursor and calcium or a calcium compound and performing annealing in the annealing step according to the present invention include calcium in an amount of 50 to 1200 ppm and a residual F component in an amount of 2000 ppm or less.

[Additional Test Example II: Electrochemical performance evaluation]

The electrochemical performance of the recycled or fresh cathode active materials prepared in Additional Examples 1 to 10, Additional Comparative Example 1, and Additional Reference Example was measured through coin half cell (hereinafter referred to as 'CHC') evaluation, and the results are shown in Table 4 below.
* CHC manufacturing: 96 % by weight of a recycled cathode active material, 2 % by weight of carbon black as a conductive material, and 2 % by weight of PVdF as a binder were prepared and mixed with an NMP to obtain slurry. Aluminum foil was coated with the slurry to manufacture a cathode. Then, a cell (coin half cell, CHC) was manufactured. The electrochemical performance (charge capacity: CH, discharge capacity: DCH, and efficiency: Eff(%)) was evaluated under the conditions of ethylene carbonate (EC): dimethyl methyl carbonate (DMC) = 3:7 (weight ratio) as the electrolyte solution and other additives.

* Initial capacity (CH and DCH) evaluation of cells: At 25 °C, each cell was subjected to one charge/discharge cycle under the following conditions.

Charge (CH): 0.2C, CC/CV, 4.25V, 0.05C cut-off

Discharge (DCH): 0.2C, CC, 2.5V, cut-off

* Charge/discharge efficiency of the cell (Eff): The charge/discharge efficiency was calculated using Equation 1 using the charge capacity and discharge capacity obtained from the initial capacity evaluation of the cell.

[Table 4]

| Classification | 0.2C/0.2C initial capacity (@25°C) | | |
|---|---|---|---|
| | Charge | Discharge | Efficiency |
| Additional Example 1 | 237.00 | 212.92 | 89.8 |

(continued)

| Classification | 0.2C/0.2C initial capacity (@25°C) | | |
| --- | --- | --- | --- |
| | Charge | Discharge | Efficiency |
| Additional Example 2 | 235.8 | 211.8 | 89.8 |
| Additional Example 3 | 237.2 | 211.5 | 89.2 |
| Additional Example 4 | 237.2 | 213.7 | 90.1 |
| Additional Example 5 | 233.1 | 209.0 | 89.7 |
| Additional Example 6 | 237.1 | 214.4 | 90.5 |
| Additional Example 7 | 235.5 | 212.2 | 90.1 |
| Additional Example 8 | 234.1 | 210.1 | 89.7 |
| Additional Example 9 | 234.4 | 210.3 | 89.7 |
| Additional Example 10 | 236.4 | 211.4 | 89.4 |
| Additional Comparative Example 1 | 235.03 | 213.63 | 90.9 |
| Additional Reference Example | 233.75 | 21.32 | 91.8 |

As shown in Table 4, the cathode active materials (Additional Examples 1 to 10) prepared by adding a lithium precursor and calcium or a calcium compound and performing annealing in the annealing step according to the present invention exhibited the initial capacity similar to that of the recycled cathode active material (Additional Comparative Example 1) prepared by adding only the lithium precursor and performing annealing in the annealing step.

[Additional Test Example III: Evaluation of lifespan characteristics]

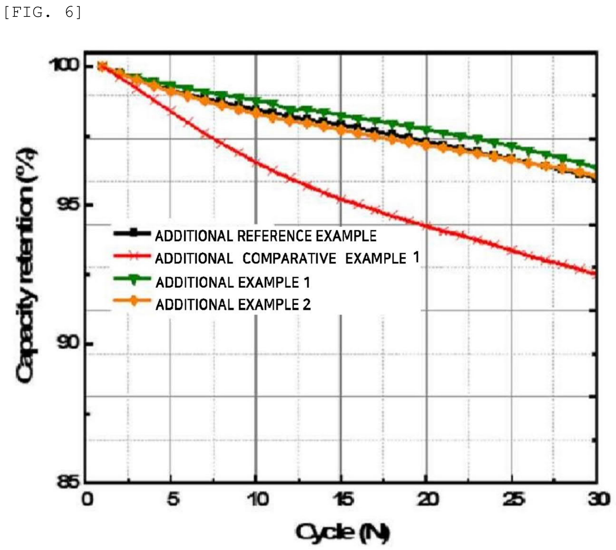

CHC was manufactured by the above method using the recycled or fresh cathode active materials prepared in Additional Example 1 to 10, Additional Comparative Example 1, and Additional Reference Example. The lifespan characteristics of the CHC were measured as follows, and the results are shown in FIGS. 6 to 10 below.
* Evaluation of high-temperature lifespan characteristics of CHC: At 45 °C, 30 cycles of charge and discharge were performed on each cell under the following conditions, the capacity retention was calculated using Equation 2, and the results are shown in FIGS. 6 to 10 below.

Charge: 0.33C, CC/CV, 4.5V, 0.05C cut-off
Discharge: 0.33C, CC, 3.0V

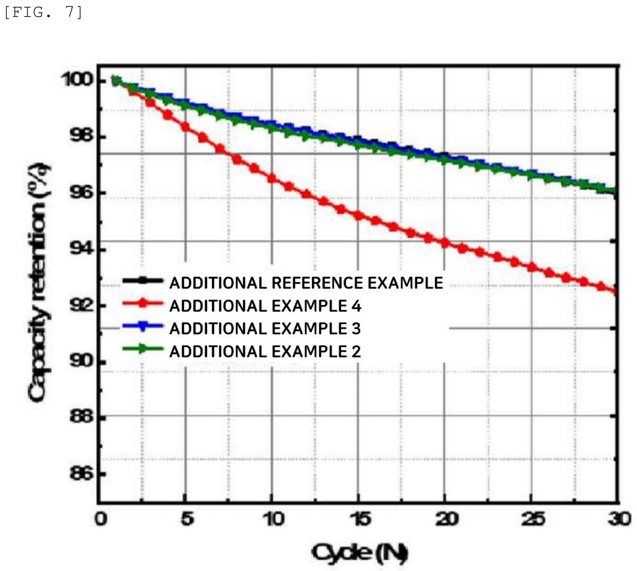

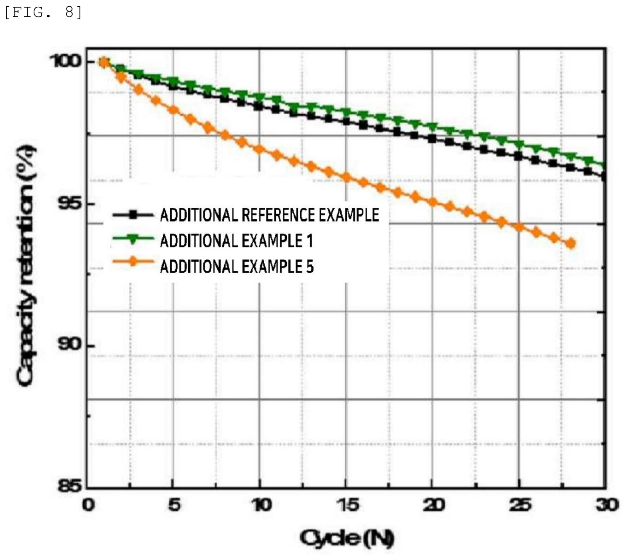

FIG. 6 below is a graph showing the change in capacity according to the number of cycles (Cycle No.) as the results of CHC evaluation conducted on each of the recycled or fresh cathode active materials prepared in Additional Examples 1 and 2, Additional Comparative Example 1, and Additional Reference Example. Referring to FIG. 6, the recycled cathode active materials (Additional Examples 1 and 2) according to the present invention exhibited capacity retention superior to that of the recycled cathode active material (Additional Comparative Example 1) prepared by adding only the lithium precursor in the annealing step, and exhibited capacity retention similar to that of the fresh cathode active material (Additional Reference Example).
In addition, FIG. 7 below shows the results of CHC evaluation conducted on each of the recycled or fresh cathode active materials prepared in Additional Examples 2 to 4 and Additional Reference Example. In the case of the recycled cathode active materials (Additional Examples 2 and 3) prepared by performing the second annealing step at 700 °C and 500 °C, respectively, compared to the fresh cathode active material (Additional Reference Example), capacity retention was excellent. In addition, in the case of the recycled cathode active material (Additional Example 4) prepared by performing the second annealing step at 300 °C, capacity retention was reduced as the number of cycles increased.
In addition, FIG. 8 below shows the results of CHC evaluation conducted on each of the recycled or fresh cathode active materials prepared in Additional Examples 1 and 5 and Additional Reference Example. In the case of the recycled cathode active material (Additional Example 1) prepared by adding $Ca(OH)_2$ as the calcium compound in the annealing step, compared to the fresh cathode active material (Additional Reference Example), capacity retention was excellent. In the case of the recycled cathode active material (Additional Example 5) prepared by adding $Ca(NO_3)_2$ as the calcium

compound, compared to the fresh cathode active material (Additional Reference Example), capacity retention was slightly reduced.

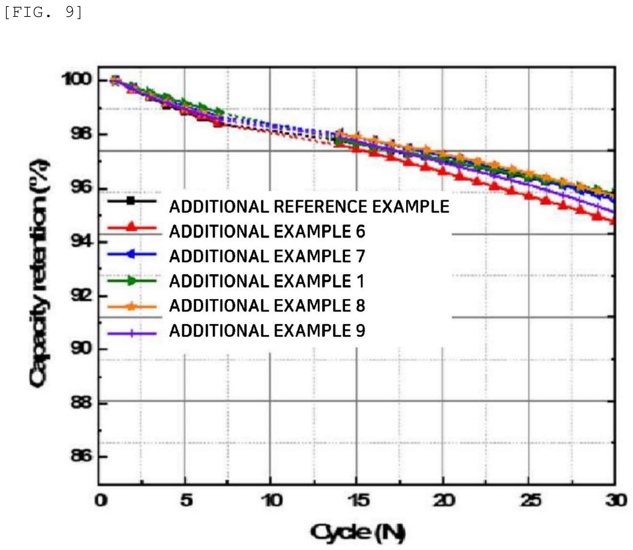

In addition, FIG. 9 below shows the results of CHC evaluation conducted on each of the recycled or fresh cathode active materials prepared in Additional Examples 1 and 6 to 9 and Additional Reference Example. The recycled cathode active materials (Additional Example 1 and 6 to 9) according to the present invention exhibited capacity retention equal or superior to that of the fresh cathode active material (Additional Reference Example). Here, the recycled cathode active materials (Additional Examples 1, 7, and 8) containing 200 ppm, 350 ppm, and 600 ppm of calcium showed excellent capacity retention.

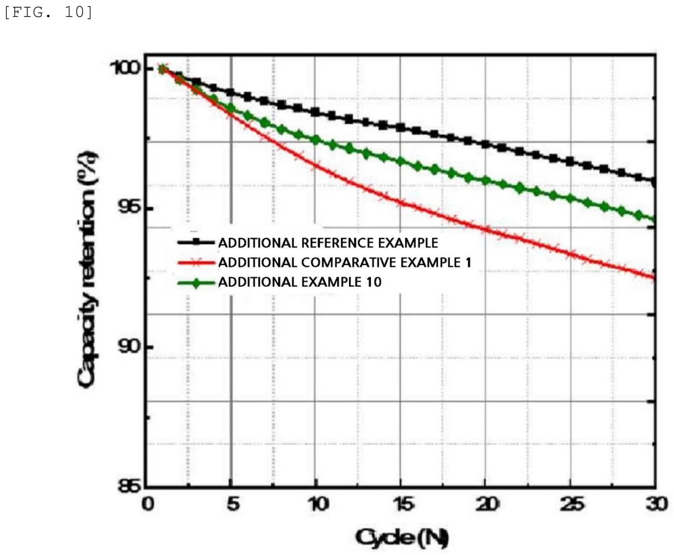

In addition, FIG. 10 below shows the results of CHC evaluation conducted on each of the recycled or fresh cathode active materials prepared in Additional Example 10, Additional Comparative Example 1, and Additional Reference Example. The recycled cathode active material (Additional Example 10) according to the present invention exhibited excellent capacity retention compared to the recycled cathode active material (Additional Comparative Example 1) prepared by adding only the lithium precursor and performing annealing in the annealing step.

[Description of Symbols]

10 : CURRENT COLLECTOR
20 : ACTIVE MATERIAL LAYER
30 : CATHODE SHEET
40 : CATHODE PLATE
50 : CATHODE SCRAPS

**Claims**

1. A method of recycling a cathode active material, comprising:

   (i) heat-treating a waste cathode in which a cathode active material layer is formed on a current collector to thermally decompose a binder and conductive material in the cathode active material layer, separate the current collector from the cathode active material layer, and recover a cathode active material in the cathode active material layer; and
   (ii) (ii-1) adding calcium or a calcium compound to the recovered cathode active material and performing reheating treatment at 600 to 750 °C; or (ii-2) pre-washing the recovered cathode active material with a washing solution, adding a lithium precursor and calcium or a calcium compound thereto, and performing annealing.

2. The method according to claim 1, wherein the calcium compound comprises one or more of $Ca(OH)_2$ and $Ca(NO_3)_2$.

3. The method according to claim 1, wherein, in step (ii-1), based on 1 mol of an F component present in the cathode active material recovered after heat treatment of step (i), the calcium or calcium compound is added in an amount corresponding to 0.03 to 0.4 mol (based on calcium metal).

4. The method according to claim 1, wherein, in step (i), the heat treatment is performed at 300 to 650 °C for 10 minutes to 10 hours.

5. The method according to claim 1, wherein, in step (ii), the reheating treatment is performed for 5 to 15 hours.

6. The method according to claim 1, wherein, in step (ii-2), based on a weight of the recovered cathode active material, the calcium or calcium compound is added in an amount corresponding to 50 to 1200 ppm (based on calcium metal).

7. The method according to claim 1, wherein, in step (ii-2), the annealing comprises a first annealing step of adding a lithium precursor to a pre-washed cathode active material and performing annealing and a second annealing step of adding calcium or a calcium compound after first annealing and performing annealing.

8. The method according to claim 1, wherein, in step (ii-2), the annealing is performed at 270 to 1000 °C.

9. The method according to claim 1, wherein, in step (ii-2), the washing solution is water or a basic aqueous lithium compound solution.

10. The method according to claim 1, wherein, in step (ii-2), the pre-washing comprises mixing the recovered cathode active material and the washing solution and performing filtration.

11. The method according to claim 1, wherein the cathode active material that has undergone step (ii-2) comprises 50 to 1200 ppm of calcium.

12. The method according to claim 1, wherein the heat treatment of step (i) and the reheating treatment and/or annealing of step (ii) are performed under an air atmosphere or under an oxygen atmosphere.

13. The method according to claim 1, wherein the cathode active material comprises one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.

14. The method according to claim 1, wherein the method of recycling a cathode active material comprises (iii) washing the cathode active material reheat-treated in step (ii-1) with a washing solution.

15. The method according to claim 1, wherein the method of recycling a cathode active material comprises (iv) adding a lithium precursor to the cathode active material reheat-treated in step (ii-1) and performing annealing.

16. The method according to claim 1 or 15, wherein the lithium precursor comprises one or more selected from the group consisting of $LiOH$, $Li_2CO_3$, $LiNO_3$, and $Li_2O$.

17. The method according to claim 15, wherein the lithium precursor of annealing step (iv) is added in at least an amount corresponding to a decrease in a molar ratio of lithium in the cathode active material of step (ii-1) based on an amount of lithium in a cathode active material in a raw material.

18. The method according to claim 15, wherein, in step (iv), the annealing is performed at 400 to 1000 °C.

19. The method according to claim 1, wherein the lithium precursor of step (ii-2) is added in at least an amount corresponding to a decrease in a molar ratio of lithium in the cathode active material of step (i) based on an amount of lithium in the pre-washed cathode active material.

20. The method according to claim 1, wherein the method of recycling a cathode active material comprises post-washing the cathode active material annealed in in step (ii-2) with a washing solution.

21. The method according to claim 1 or 15, wherein the method of recycling a cathode active material comprises coating a surface of the annealed cathode active material.

22. A cathode active material, comprising one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material; containing $CaF_2$ or 50 to 1200 ppm of calcium; and having a residual F component in a content of 2000 ppm or less.

23. The cathode active material according to claim 22, wherein a surface of the cathode active material is coated with a coating agent containing a metal or carbon.

24. The cathode active material according to claim 23, wherein the metal is boron (B), tungsten (W), or a mixture thereof.

25. The cathode active material according to claim 22, wherein the cathode active material is a recycled cathode active material.

[FIG. 1]

[FIG. 2]

```
S10 ─┐  WASTE CATHODES
        │
        ▼
S20 ─┐  CRUSHING
        │
        ▼
S30 ─┐  HEAT TREATING
        │
        ▼
S40 ─┐  REHEAT TREATING
        │
        ▼
S50 ─┐  PRE-WASHING
        │
        ▼
S60 ─┐  ANNEALING
        │
        ▼
S70 ─┐  POST-WASHING
        │
        ▼
S80 ─┐  SURFACE COATING
        │
        ▼
     RECYCLED CATHODE ACTIVE MATERIAL
```

[FIG. 3]

[FIG. 4]

[FIG. 5]

S10 — WASTE CATHODES

↓

S20 — CRUSHING

↓

S30 — HEAT TREATING

↓

S40 — PRE-WASHING

↓

S50 — ANNEALING

↓

S60 — POST-WASHING

↓

S70 — SURFACE COATING

↓

RECYCLED CATHODE ACTIVE MATERIAL

[FIG. 6]

[FIG. 7]

[FIG. 8]

[FIG. 9]

[FIG. 10]

## INTERNATIONAL SEARCH REPORT

| International application No. |
|---|
| **PCT/KR2024/015615** |

| A. | CLASSIFICATION OF SUBJECT MATTER |
|---|---|

**H01M 10/54**(2006.01)i; **H01M 4/525**(2010.01)i; **H01M 4/505**(2010.01)i; **H01M 4/36**(2006.01)i; **C22B 1/02**(2006.01)i; **C22B 7/00**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/54(2006.01); C22B 26/12(2006.01); C22B 3/22(2006.01); H01M 10/052(2010.01); H01M 4/13(2010.01); H01M 4/505(2010.01); H01M 4/525(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 활물질 (active material), 재생 (reclamation), 칼슘 (calcium), 불소 (fluoride), 어닐링 (annealing)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-191184 A (JAPAN METALS & CHEM. CO., LTD. et al.) 26 November 2020 (2020-11-26) See abstract; claims 1, 3 and 4; and paragraphs [0016], [0026], [0029]-[0031], [0038] and [0040]. | 1-5,12-14,22,25 |
| Y | | 15-18,21,23,24 |
| A | | 6-11,19,20 |
| X | KR 10-2023-0042933 A (SK INNOVATION CO., LTD.) 30 March 2023 (2023-03-30) See abstract; claims 1 and 9; and paragraphs [0016], [0017], [0042], [0066] and [0112]-[0114]. | 1-5,12-14 |
| Y | | 15-18,21 |
| A | | 6-11,19,20,22-25 |
| Y | KR 10-2023-0037317 A (LG ENERGY SOLUTION, LTD.) 16 March 2023 (2023-03-16) See claims 1, 11, 12 and 15; and paragraph [0111]. | 15-18,21,23,24 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 January 2025** | **16 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 645 523 A1**

**INTERNATIONAL SEARCH REPORT**

International application No.

**PCT/KR2024/015615**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0092885 A (DOWA ECO-SYSTEM CO., LTD.) 04 July 2022 (2022-07-04)<br>See abstract; and claim 1. | 1-25 |
| A | KR 10-2022-0151627 A (DOWA ECO-SYSTEM CO., LTD.) 15 November 2022 (2022-11-15)<br>See abstract; and claim 1. | 1-25 |

Form PCT/ISA/210 (second sheet) (July 2022)

**INTERNATIONAL SEARCH REPORT**
Information on patent family members

International application No.

**PCT/KR2024/015615**

| Patent document cited in search report | | | Publication date (day/month/year) | Patent family member(s) | | | Publication date (day/month/year) |
|---|---|---|---|---|---|---|---|
| JP | 2020-191184 | A | 26 November 2020 | JP | 7465495 | B2 | 11 April 2024 |
| KR | 10-2023-0042933 | A | 30 March 2023 | CN | 117981141 | A | 03 May 2024 |
| | | | | EP | 4391149 | A1 | 26 June 2024 |
| | | | | JP | 2024-533694 | A | 12 September 2024 |
| | | | | US | 2024-0396111 | A1 | 28 November 2024 |
| | | | | WO | 2023-048430 | A1 | 30 March 2023 |
| KR | 10-2023-0037317 | A | 16 March 2023 | CN | 116745934 | A | 12 September 2023 |
| | | | | EP | 4266454 | A1 | 25 October 2023 |
| | | | | JP | 2023-554364 | A | 27 December 2023 |
| | | | | US | 2024-0039070 | A1 | 01 February 2024 |
| | | | | WO | 2023-038283 | A1 | 16 March 2023 |
| KR | 10-2022-0092885 | A | 04 July 2022 | CN | 114641584 | A | 17 June 2022 |
| | | | | CN | 114641584 | B | 05 April 2024 |
| | | | | EP | 4056291 | A1 | 14 September 2022 |
| | | | | EP | 4410441 | A2 | 07 August 2024 |
| | | | | EP | 4410441 | A3 | 30 October 2024 |
| | | | | JP | 6869444 | B1 | 12 May 2021 |
| | | | | US | 2022-0396852 | A1 | 15 December 2022 |
| | | | | WO | 2021-090571 | A1 | 14 May 2021 |
| KR | 10-2022-0151627 | A | 15 November 2022 | CN | 115552694 | A | 30 December 2022 |
| | | | | EP | 4119245 | A1 | 18 January 2023 |
| | | | | JP | 2021-150282 | A | 27 September 2021 |
| | | | | JP | 6963135 | B2 | 05 November 2021 |
| | | | | TW | 202141842 | A | 01 November 2021 |
| | | | | US | 2023-0104457 | A1 | 06 April 2023 |
| | | | | WO | 2021-182452 | A1 | 16 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230137425
- KR 1020230137423
- KR 1020240138681